# EUROPEAN PATENT SPECIFICATION

(11) **EP 4 331 317 B1**
(45) Date of publication and mention of the grant of the patent: **02.07.2025**
(21) Application number: 22725090.9
(22) Date of filing: 04.05.2022
(51) Int. Cl.: H04W 76/27, H04W 72/04, H04W 88/08

(54) **EARLY DATA COMMUNICATION WITH CONFIGURED RESOURCES**
FRÜHE DATENKOMMUNIKATION MIT KONFIGURIERTEN RESSOURCEN
COMMUNICATION DES DONNÉES PRÉCOCE AVEC DES RESSOURCES CONFIGURÉES

(30) Priority: 06.05.2021 US 202163185173 P
(43) Date of publication of application: 06.03.2024
(73) Proprietor: GOOGLE LLC, Mountain View CA 94043 (US)
(72) Inventor: WU, Chih-Hsiang, Mountain View, CA 94043 (US)
(74) Representative: Marks & Clerk GST
(86) International application number: PCT/US2022/027608
(87) International publication number: WO 2022/235751

(56) References cited:
- EP-A1- 3 648 541
- WO-A1-2020/171369

## Description

### FIELD OF THE DISCLOSURE

This disclosure relates generally to wireless communications and, more particularly, to communication of uplink and/or downlink data on configured resources at a user equipment (UE) and a distributed unit (DU) when the UE operates in an inactive or idle state associated with a protocol for controlling radio resources.

### BACKGROUND

This background description is provided for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

Generally speaking, a base station operating a cellular radio access network (RAN) communicates with a user equipment (UE) using a radio access technology (RAT) and multiple layers of a protocol stack. For example, the physical layer (PHY) of a RAT provides transport channels to the Medium Access Control (MAC) sublayer, which in turn provides logical channels to the Radio Link Control (RLC) sublayer, and the RLC sublayer in turn provides data transfer services to the Packet Data Convergence Protocol (PDCP) sublayer. The Radio Resource Control (RRC) sublayer is disposed above the PDCP sublayer.

The RRC sublayer specifies the RRC_IDLE state, in which a UE does not have an active radio connection with a base station; the RRC_CONNECTED state, in which the UE has an active radio connection with the base station; and the RRC_INACTIVE to allow a UE to more quickly transition back to the RRC_CONNECTED state due to Radio Access Network (RAN)-level base station coordination and RAN-paging procedures. In some cases, the UE in the RRC_IDLE or RRC_INACTIVE state has only one, relatively small packet to transmit. In these cases, the UE in the RRC_IDLE or RRC_INACTIVE state can perform an early data transmission without transitioning to the RRC_CONNECTED state, e.g., by using techniques as specified in section 7.3a-7.3d in 3GPP specification 36.300 v16.4.0.

In section 7.3d of the 3GPP specification, a base station (i.e., eNB or ng-eNB) can transmit to the UE an *RRCConnectionRelease* message including a preconfigured uplink resource (PUR) configuration while the UE is in the RRC_CONNECTED state. Thus, the
UE in one implementation can transmit to the base station an *RRCEarlyDataRequest* message containing a user data packet, as described in section 7.3d in the 3GPP specification. In another implementation, the UE can transmit to the base station a user data packet on a Dedicated Traffic Channel (DTCH) multiplexed with an *RRCConnectionResumeRequest* message on a Common Control Channel (CCCH). That is, the UE generates a MAC PDU including an *RRCConnectionResumeRequest* message and the user data packet, as described in section 7.3d in the 3GPP specification.

However, implementing early data communication techniques presents several challenges. In particular, a 5G NR radio access network (i.e., the NG-RAN) may include distributed base stations, where each distributed base station includes a central unit (CU) and at least one distributed unit (DU). It is not clear how a distributed base station performs early data communication with a UE operating in an inactive state (e.g., RRC_INACTIVE) or an idle state (e.g., RRC_IDLE) using configured resources. As one example, it is not clear how a CU can obtain, from the DU, a configured resources configuration for a UE that is operating in an inactive or idle state without transitioning the UE to the connected state. Further, it is also not clear how a distributed base station configures a radio network temporary identifier (RNTI) for early data communication.

WO 2020/171369 proposes a method for performing uplink data fast transmission. The method includes receiving a UE context release message including a user plane ID (UPID) from control plane (CP) of a central unit (CU) of the network node, forwarding the UPID via a radio resource control (RRC) connection release message to a wireless device, receiving a RRC resume request message including user data with the UPID from the wireless device, and transmitting the user data to CU based on the UPID.

### SUMMARY

A base station and/or a UE can implement the techniques of this disclosure for managing early data communication using configured resources. Initially, a base station and a UE communicate using a first temporary identifier. In some scenarios, the UE communicates with the base station using the first temporary identifier while the UE operates in a connected state. In other scenarios, the UE operates in an inactive or an idle state (i.e., a state in which a radio resource control connection between the base station and the UE is not active), performs a random access procedure with the base station in order to perform early data communication, and receives the first temporary identifier from the base station during the random access procedure.

At a later time, a central unit (CU) of the base station determines to configure the UE to use a configured resources configuration while operating in an inactive or idle state. The CU requests a configured resources configuration from a distributed unit (DU) of the base station. In response, the DU provides, in a DU-to-CU message, (i) a configured resources configuration and (ii) a second temporary identifier. The DU may include the second temporary identifier in the DU-to-CU message as an information element separate from the configured resources configuration and/or within the configured resources configuration. If the DU includes the second temporary identifier as an information element, the CU can identify the second temporary identifier without decoding the configured resources configuration.

The CU transmits the configured resources configuration and the second temporary identifier to the UE via the DU. The UE can then communicate with the DU in accordance with the configured resources configuration while operating in the inactive or idle state. The configured resources configuration may include a configured grant (CG) configuration that indicates resources on which the UE can send uplink transmissions to the DU and/or a semi-persistent scheduling (SPS) configuration that indicates resources on which the UE can receive downlink transmissions from the DU.

The UE, CU, and DU can utilize the first and second temporary identifiers for various purposes depending on the implementation. For example, when transmitting an uplink message to the CU via the DU, the UE can generate an authentication code (e.g., a Message Authentication Code for Integrity (MAC-I)) for the uplink message using either the first temporary identifier or the second temporary identifier. The CU can then use the corresponding first or second temporary identifier to verify the authentication code. Similarly, if the UE transitions from the inactive or idle state to the connected state and detects a failure while communicating with the CU or the DU, the UE can transmit a request to reestablish the radio resource control connection with the base station. To generate an authentication code for the request, the UE utilizes the second temporary identifier, which the CU can use to verify the request.

As another example, the DU may send downlink control information (DCIs) to the UE using the second temporary identifier while the UE operates in the inactive or the idle state. More particularly, the DU can scramble a cyclic redundancy check (CRC) value for a DCI using the second temporary identifier and transmit the DCI with the CRC value to the UE. The DU may transmit such DCIs to reschedule an earlier transmission scheduled by the configured resources configuration that failed, or to schedule a downlink/uplink transmission to/from the UE.

One example embodiment of these techniques is a method implemented in a distributed unit (DU) of a distributed base station for managing early data communication with a user equipment (UE). The distributed base station includes the DU and a central unit (CU). The method can be executed by processing hardware and includes communicating with the UE using a first temporary identifier of the UE. The method also includes receiving, from the CU, a CU-to-DU message requesting a configured resources configuration for the UE, and transmitting, to the CU, a DU-to-CU message including the configured resources configuration and a second temporary identifier for the UE. The method further includes receiving, by the processing hardware from the CU, a second CU-to-DU message including a message (i) including the configured resources configuration and the second temporary identifier and (ii) indicating to release a radio resource control connection; extracting, by the processing hardware, the message from the second CU-to-DU message; and transmitting, by the processing hardware, the message to the UE. The method further includes communicating with the UE in accordance with the configured resources configuration while a radio resource control connection between the UE and the distributed base station is not active.

Another example embodiment of these techniques is a method implemented in a CU of a distributed base station for managing early data communication with a UE. The distributed base station includes the CU and a DU. The method can be executed by processing hardware and includes obtaining a first temporary identifier of the UE. The method also includes transmitting, to the DU, a CU-to-DU message requesting a configured resources configuration for the UE to use to communicate with the distributed base station while a radio resource control connection between the UE and the distributed base station is not active. The method further includes receiving, from the DU, a DU-to-CU message including the configured resources configuration and a second temporary identifier for the UE, transmitting the configured resources configuration and the second temporary identifier to the UE via the DU.

A further example embodiment of these techniques is a network node of a distributed base station including processing hardware and configured to implement one of the above methods.

A complementary method of these techniques may be implemented in a UE for managing communications with a base station. The method can be executed by processing hardware and includes communicating with a base station using a first temporary identifier. The method also includes receiving, from the base station, a first message including (i) a configured resources configuration and (ii) a second temporary identifier, and communicating, by the processing hardware, with the base station in accordance with the configured resources configuration while a radio resource control connection between the UE and the base station is not active. The method further includes receiving, from the base station while the radio resource control connection is not active, a second message rejecting the radio resource control connection, and processing the first temporary identifier in response to receiving the second message.

Yet another example embodiment of these techniques is a UE including processing hardware and configured to implement the method above.

### BRIEF DESCRIPTION OF THE DRAWINGS

Fig. 1A is a block diagram of an example wireless communication system in which a RAN and/or a UE implement the techniques of this disclosure for performing early data communication;
Fig. 1B is a block diagram of an example base station including a central unit (CU) and a distributed unit (DU) that can operate in the system of Fig. 1A;
Fig. 2A is a block diagram of an example protocol stack according to which the UE of Fig. 1A communicates with base stations;
Fig. 2B is a block diagram of an example protocol stack according to which the UE of Fig. 1A communicates with a CU and a DU;
Fig. 3A is an example message sequence in which a CU obtains an radio network temporary identifier (RNTI) and a configured resources configuration including a configured grant (CG) configuration for a UE operating in a connected state from a DU and transitions the UE to an inactive state, and the DU communicates with the UE using the CG configuration and the RNTI while the UE operates in the inactive state;
Fig. 3B is an example message sequence similar to the message sequence of Fig. 3A, but where the CU obtains a semi-persistent scheduling (SPS) configuration in addition to the CG configuration;
Fig. 4A is an example message sequence similar to the message sequence of Fig. 3A, but where the UE initially operates in an inactive state, performs a four-step random access procedure with the DU, and the CU obtains a second RNTI and a configured resources configuration (e.g., a CG configuration and/or an SPS configuration) from the DU while the UE operates in the inactive state;
Fig. 4B is an example message sequence similar to the message sequence of Fig. 4A, but where the UE performs a two-step random access procedure;
Fig. 5A is an example message sequence similar to the message sequence of Fig. 3A, where the CU receives a new RNTI from the DU during the early data communication with the UE, transitions the UE to a connected state, and communicates the new RNTI to the UE for the UE to utilize while operating in the connected state;
Fig. 5B is an example message sequence similar to the message sequence of Fig. 5A, but where the CU requests the new RNTI from the DU after performing early data communication with the UE and after determining to transition the UE to the connected state;
Fig. 5C is an example message sequence similar to the message sequence of Fig 5A, but where the CU does not obtain a new RNTI for the UE and the utilizes the previous RNTI received with the configured resources configuration to communicate while operating in the connected state;
Fig. 5D is an example message sequence similar to the message sequence of Fig. 3A, where the CU transmits an RRC reject message to the UE;
Fig. 5E is an example message sequence similar to the message sequence of Fig. 5D, but where the UE releases the configured resources configuration in response to rejecting an RRC reject message;
Fig. 5F is an example message sequence similar to the message sequence of Fig. 5E, but where the UE also transitions from an inactive state to an idle state in response to receiving an RRC reject message;
Fig. 6A is a flow diagram of an example method in which a DU sends a configured resources configuration and an RNTI to a CU and communicates with a UE operating in an inactive state using the configured resources configuration and the RNTI;
Fig. 6B is a flow diagram of an example method in which a DU sends a configured resources configuration to a CU and communicates with a UE operating in an inactive state using the configured resources configuration and an RNTI that the UE previously used while operating in a connected state;
Fig. 6C is a flow diagram of an example method similar to the method of Fig. 6A, where the DU transmits a radio configuration and a new RNTI to the CU while the UE operates in an inactive state, and communicates with the UE using the radio configuration and the new RNTI after the UE transitions to the connected state;
Fig. 7A is a flow diagram of an example method in which a CU receives a configured resources configuration and an RNTI from a DU, and transmits an RRC message to the UE including the configured resources configuration and the RNTI for the UE to utilize while operating in an inactive state;
Fig. 7B is a flow diagram of an example method similar to the method of Fig. 7A, where the CU determines to transition the UE to a connected state and requests a radio configuration and a new RNTI from the DU;
Fig. 8 is a flow diagram of an example method for processing an RNTI received with data from a UE operating in an inactive state, which can be implemented by a CU;
Fig. 9 is a flow diagram of an example method for determining whether to transmit an RNTI to a UE operating in an inactive state, which can be implemented by a DU;
Fig. 10 is a flow diagram of an example method for configuring a UE with configured resources while the UE operates in an inactive state, which can be implemented by a CU;
Fig. 11 is a flow diagram of an example method for processing an RNTI based on whether a UE is transitioning to a connected state, which can be implemented by a CU;
Fig. 12 is a flow diagram of an example method for processing a cyclic redundancy check (CRC) received with a downlink control information (DCI), which can be implemented by a UE;
Fig. 13 is a flow diagram of an example method for determining whether to include a reconfiguration with sync indication in a message instructing a UE to transition to an inactive state, which can be implemented by a CU or a base station;
Fig. 14 is a flow diagram of an example method for managing early data communication with a UE, which can be performed by a DU of a distributed base station;
Fig. 15 is a flow diagram of an example method for managing early data communication with a UE, which can be performed by a CU of a distributed base station; and
Fig. 16 is a flow diagram of a complementary method for managing early data communication with a base station, which can be performed by a UE.

### DETAILED DESCRIPTION OF THE DRAWINGS

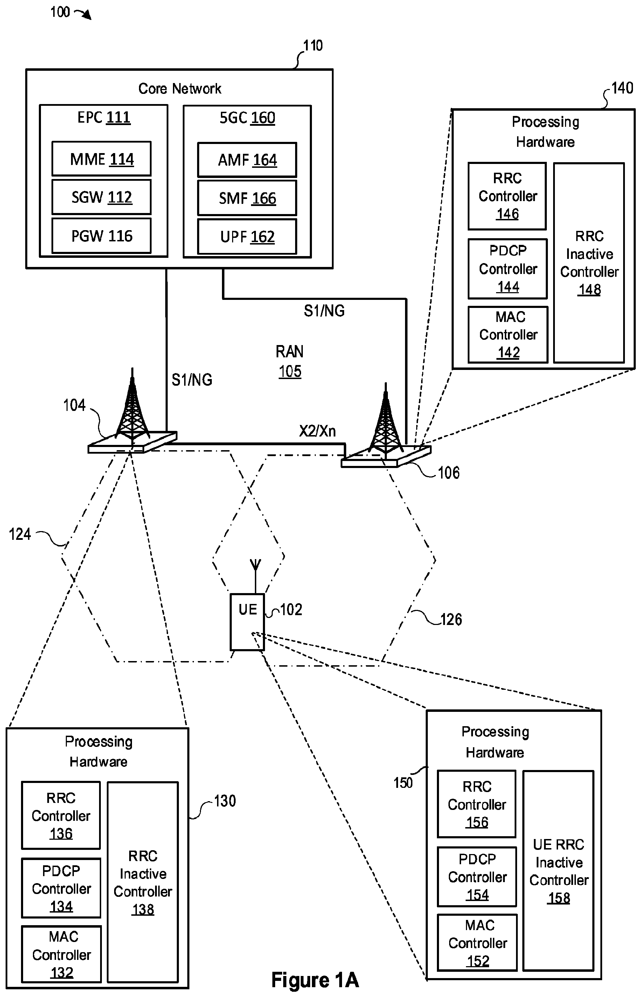

Referring first to Fig. 1A, an example wireless communication system 100 includes a UE 102, a base station (BS) 104, a base station 106, and a core network (CN) 110. The base stations 104 and 106 can operate in a RAN 105 connected to the core network (CN) 110. The CN 110 can be implemented as an evolved packet core (EPC) 111 or a fifth generation (5G) core (5GC) 160, for example. The CN 110 can also be implemented as a sixth generation (6G) core in another example.

The base station 104 covers a cell 124, and the base station 106 covers a cell 126. If the base station 104 is a gNB, the cell 124 is an NR cell. If the base station 124 is an ng-eNB, the cell 124 is an evolved universal terrestrial radio access (E-UTRA) cell. Similarly, if the base station 106 is a gNB, the cell 126 is an NR cell, and if the base station 126 is an ng-eNB, the cell 126 is an E-UTRA cell. The cells 124 and 126 can be in the same Radio Access Network Notification Areas (RNA) or different RNAs. The cells 124 and 126 can partially overlap, so that the UE 102 can select, reselect or hands over from one of the cells 124 and 126 to the other. In general, the RAN 105 can include any number of base stations, and each of the base stations can cover one, two, three, or any other suitable number of cells. The UE 102 can support at least a 5G NR (or simply, "NR") or E-UTRA air interface to communicate with the base stations 104 and 106. Each of the base stations 104, 106 can connect to the CN 110 via an interface (e.g., S1 or NG interface). The base stations 104 and 106 also can be interconnected via an interface (e.g., X2 or Xn interface) for interconnecting NG RAN nodes.

Among other components, the EPC 111 can include a Serving Gateway (SGW) 112, a Mobility Management Entity (MME) 114, and a Packet Data Network Gateway (PGW) 116. The SGW 112 in general is configured to transfer user-plane packets related to audio calls, video calls, Internet traffic, etc., and the MME 114 is configured to manage authentication, registration, paging, and other related functions. The PGW 116 provides connectivity from the UE to one or more external packet data networks, e.g., an Internet network and/or an Internet Protocol (IP) Multimedia Subsystem (IMS) network. The 5GC 160 includes a User Plane Function (UPF) 162 and an Access and Mobility Management (AMF) 164, and/or Session Management Function (SMF) 166. Generally speaking, the UPF 162 is configured to transfer user-plane packets related to audio calls, video calls, Internet traffic, etc., the AMF 164 is configured to manage authentication, registration, paging, and other related functions, and the SMF 166 is configured to manage PDU sessions.

As discussed in detail below, the UE 102 and/or the RAN 105 can implement the techniques of this disclosure for communicating when the radio connection between the UE 102 and the RAN 105 is suspended, e.g., when the UE 102 operates in the inactive or idle state of the protocol for controlling radio resources between the UE 102 and the RAN 105. For clarity, the examples below refer to the RRC_INACTIVE or RRC_IDLE state of the RRC protocol.

As used in this disclosure, the term "data" or "data packet" refers to signaling, control-plane information at a protocol layer of controlling radio resources (e.g., RRC), controlling mobility management (MM), controlling session management (SM), or refers to non-signaling, non-control-plane information at protocol layers above the layer of the protocol for controlling radio resources (e.g., RRC), above the layer of the protocol for controlling mobility management (MM), above the layer of the protocol for controlling session management (SM), or above the layer of the protocol for controlling quality of service (QoS) flows (e.g., service data adaptation protocol (SDAP)). The data to which the UE and/or the RAN applies the techniques of this disclosure can include for example Internet of things (IoT) data, Ethernet traffic data, Internet traffic data, or a short message service (SMS) message. Further, as discussed below, the UE 102 in some implementations applies these techniques only if the size of the data is below a certain threshold value.

In the example scenarios discussed below, the UE 102 transitions to the RRC_INACTIVE or RRC_IDLE state, then selects a cell of the base station 104, and exchanges data with the base station 104 either via the base station 106 or with the base station 104 directly, without transitioning to the RRC_CONNECTED state. As a more specific example, after the UE 102 determines that data is available for uplink transmission in the RRC_INACTIVE or RRC_IDLE state, the UE 102 can apply one or more security functions to the UL data packet, generate a first UL protocol data unit (PDU) including the security-protected packet, include an uplink (UL) RRC message along with the first UL PDU in a second UL PDU, and transmit the second UL PDU to the RAN 105. The UE 102 includes a UE identity/identifier (ID) of the UE 102 in the UL RRC message. The RAN 105 can identify the UE 102 based on the UE ID. In some implementations, the UE ID can be an inactive Radio Network Temporary Identifier (I-RNTI), resume ID, or a non-access stratum (NAS) ID. The NAS ID can be an S-Temporary Mobile Subscriber Identity (S-TMSI) or a Global Unique Temporary Identifier (GUTI).

The one or more security functions can include an integrity protection and/or encryption function. When integrity protection is enabled, the UE 102 can generate a message authentication code for integrity (MAC-I) to protect the integrity of the data. Thus, the UE 102 in this case generates a security-protected packet including the data and the MAC-I. When encryption is enabled, the UE 102 can encrypt the data to obtain an encrypted packet, so that the security-protected packet includes encrypted data. When both integrity protection and encryption are enabled, the UE 102 can generate a MAC-I for protecting the integrity of the data and encrypt the data along with the MAC-I to generate an encrypted packet and an encrypted MAC-I. The UE 102 then can transmit the security-protected packet to the RAN 105, while in the RRC_INACTIVE or RRC_IDLE state.

In some implementations, the data is an uplink (UL) service data unit (SDU) of the packet data convergence protocol (PDCP) or SDAP. The UE 102 applies the security function to the SDU and includes the secured SDU in a first UL PDU (e.g., a UL PDCP PDU). The UE 102 then includes the UL PDCP PDU in a second UL PDU such as a UL MAC PDU, which can be associated with the medium access control (MAC) layer. Thus, the UE 102 in these cases transmits the secured UL PDCP PDU in the UL MAC PDU. In some implementations, the UE 102 can include, in the UL MAC PDU, a UL RRC message. In other implementations, the UE 102 may not include a UL RRC message in the UL MAC PDU. In this case, the UE 102 may not include a UE ID of the UE 102 in the UL MAC PDU that does not include a UL RRC message. In yet other implementations, the UE 102 can include the UL PDCP PDU in a UL radio link control (RLC) PDU and then include the UL RLC PDU in the UL MAC PDU. In the case where the UL MAC PDU includes a UL RRC message, the UE 102 in some implementations generates an RRC MAC-I and includes the RRC MAC-I in the UL RRC message. For example, the RRC MAC-I is a *resumeMAC-I* field, as specified in 3GPP specification 38.331. In other implementations, the UE can obtain the RRC MAC-I from the UL RRC message with an integrity key (e.g., K_{RRCint} key), an integrity protection algorithm, and other parameters such as COUNT (e.g., 32-bit, 64-bit or 128-bit value), BEARER (e.g., 5-bit value), and DIRECTION (e.g., 1-bit value).

In other implementations, the data is an uplink (UL) protocol data unit (SDU) of the NAS. The UE 102 applies the security function to the SDU and includes the secured SDU in a first UL PDU such as a NAS PDU, which can be associated with the NAS layer. For example, the NAS layer can be 5G MM or SM sublayer of 5G, evolved packet system (EPS) or 6G. Then the UE 102 can include the UL NAS PDU in a second UL PDU such as a UL RRC message. Thus, the UE 102 in these cases transmits the (first) secured UL NAS PDU in the UL RRC message. In some implementations, the UE 102 includes the UL RRC message in a UL MAC PDU and transmits the UL MAC PDU to a base station (e.g., base station 104 or 106) via a cell (e.g., cell 124 or 126). In this case, the UE 102 may not include an RRC MAC-I in the UL RRC message. Alternatively, the UE 102 may include an RRC MAC-I as described above.

In some implementations, the UL RRC message described above can be a common control channel (CCCH) message, an RRC resume request message, or an RRC early data request message. The UL RRC message can include a UE ID of the UE 102 as described above.

More generally, the UE 102 can secure the data using at least one of encryption and integrity protection, include the secured data as a security-protected packet in the first UL PDU, and transmit the first UL PDU to the RAN 105 in the second UL PDU.

In some scenarios and implementations, the base station 106 can retrieve the UE ID of the UE 102 from the UL RRC message and identify the base station 104 as the destination of the data in the first UL PDU, based on the determined UE ID. In one example implementation, the base station 106 retrieves the first UL PDU from the second UL PDU and transmits the first UL PDU to the base station 104. The base station 104 then retrieves the security-protected packet from the first UL PDU, applies one or two security functions to decrypt the data and/or check the integrity protection, and transmits the data to the CN 110 (e.g., SGW 112, UPF 162, MME 114 or AMF 164) or an edge server. More specifically, the base station 104 derives at least one security key from UE context information of the UE 102. Then the base station 104 retrieves the data from the security-protected packet by using the at least one security key and transmits the data to the CN 110 or edge server. When the security-protected packet is an encrypted packet, the base station 104 decrypts the encrypted packet to obtain the data by using the at least one security key (e.g., an (de-) encryption key). If the security-protected packet is an integrity-protected packet, the integrity protected packet may include the data and the MAC-I. The base station 104 can verify whether the MAC-I is valid for the security-protected packet by using the at least one security key (e.g., an integrity key). When the base station 104 confirms that the MAC-I is valid, the base station 104 sends the data to the CN 110 or edge server. On the other hand, when the base station 104 determines the MAC-I is invalid, the base station 104 discards the security-protected packet. Further, if the security-protected packet is both encrypted and integrity-protected, the encrypted and integrity-protected packet may include the encrypted packet along with the encrypted MAC-I. The base station 104 in this case decrypts the encrypted packet and the encrypted MAC-I to obtain the data and the MAC-I. The base station 104 then determines whether the MAC-I is valid for the data. If the base station 104 determines that the MAC-I is valid, the base station 104 retrieves the data and forwards the data to the CN 110 or edge server. However, if the base station 104 determines that the MAC-I is invalid, the base station 104 discards the packet.

In another implementation, the base station 106 retrieves the security-protected packet from the first UL PDU. The base station 106 performs a retrieve UE context procedure with the base station 104 to obtain UE context information of the UE 102 from the base station 104. The base station 106 derives at least one security key from the UE context information. Then the base station 106 retrieves the data from the security-protected packet by using the at least one security key and transmits the data to the CN 110 (e.g., UPF 162) or an edge server. When the security-protected packet is an encrypted packet, the base station 106 decrypts the encrypted packet to obtain the data by using the at least one security key (e.g., an (de-) encryption key). If the security-protected packet is an integrity-protected packet, the integrity protected packet may include the data and the MAC-I. The base station 106 can verify whether the MAC-I is valid for the security-protected packet by using the at least one security key (e.g., an integrity key). When the base station 106 confirms that the MAC-I is valid, the base station 106 sends the data to the CN 110. On the other hand, when the base station 106 determines the MAC-I is invalid, the base station 106 discards the security-protected packet. Further, if the security-protected packet is both encrypted and integrity-protected, the encrypted and integrity-protected packet may include the encrypted packet along with the encrypted MAC-I. The base station 106 in this case decrypts the encrypted packet and the encrypted MAC-I to obtain the data and the MAC-I. The base station 106 then determines whether the MAC-I is valid for the data. If the base station 106 determines that the MAC-I is valid, the base station 106 retrieves the data and forwards the data to the data CN 112. However, if the base station 106 determines that the MAC-I is invalid, the base station 106 discards the packet.

In other scenarios and implementations, the base station 104 can retrieve the UE ID of the UE 102 from the UL RRC message and identify that the base station 104 stores UE context information of the UE 102. Thus, the base station 104 retrieves the security-protected packet from the first UL PDU, retrieves the data from the security-protected packet, and sends the data to the CN 110 or edge server as described above.

Further, the RAN 105 in some cases transmits data in the downlink (DL) direction to the UE 102 operating in the RRC_INACTIVE or RRC_IDLE state.

For example, when the base station 104 determines that data is available for downlink transmission to the UE 102 currently operating in the RRC_INACTIVE or RRC_IDLE state, the base station 104 can apply at least one security function to the data to generate a security-protected packet, generate a first DL PDU including the security-protected packet, and include the first DL PDU in a second DL PDU. To secure the data, the base station 104 can apply a security function (e.g., integrity protection and/or encryption) to the data. More particularly, when integrity protection is enabled, the base station 104 generates a MAC-I for protecting integrity of the data, so that security-protected packet includes the data and the MAC-I. When encryption is enabled, the base station 104 encrypts the data to generate an encrypted packet, so that security-protected packet is an encrypted packet. Further, when both integrity protection and encryption are enabled, the base station 104 can generate a MAC-I for protecting integrity of the data and encrypt the data along with the MAC-I to generate an encrypted packet and an encrypted MAC-I. The base station 104 in some implementations generates a first DL PDU, such as a DL PDCP PDU, using the security-protected packet, includes the first DL PDU in a second DL PDU associated with the MAC layer for example (e.g., a DL MAC PDU), and transmits the second DL PDU to the UE 102 without first causing the UE 102 to transition from the RRC_INACTIVE or RRC_IDLE state to the RRC_CONNECTED state. In some implementations, the base station 104 includes the DL PDCP PDU in a DL RLC PDU, includes the DL RLC PDU in the DL MAC PDU, and transmits the DL MAC PDU to the UE 102 without first causing the UE 102 to transition from the RRC_INACTIVE or RRC_IDLE state to the RRC_CONNECTED state.

In another implementation, the base station 104 transmits the first DL PDU to the base station 106, which then generates a second PDU (e.g., a DL MAC PDU) including the first DL PDU and transmits the second DL PDU to the UE 102 without first causing the UE 102 to transition from the RRC_INACTIVE or RRC_IDLE state to the RRC_CONNECTED state. In some implementations, the base station 106 generates a DL RLC PDU including the first DL PDU and includes the DL RLC PDU in the second DL PDU. In yet another implementation, the base station 104 includes the first DL PDU in a DL RLC PDU and transmits the DL RLC PDU to the base station 106, which then generate a second DL PDU (e.g. a DL MAC PDU) including the DL RLC PDU and transmits the second DL PDU to the UE 102.

In some implementations, the base station (i.e., the base station 104 or 106) generates a downlink control information (DCI) and a cyclic redundancy check (CRC) scrambled with an ID of the UE 102 to transmit the second DL PDU generated by the base station. In some implementations, the ID of the UE 102 can be a Radio Network Temporary Identifier (RNTI). For example, the RNTI can be a cell RNTI (C-RNTI), a temporary C-RNTI, or an inactive C-RNTI. The base station transmits the DCI and scrambled CRC on a physical downlink control channel (PDCCH) to the UE 102 operating in the RRC_INACTIVE or RRC_IDLE state. In some implementations, the base station assigns the ID of the UE 102 to the UE 102 in a random access response that the base station transmits in a random access procedure with the UE 102 before transmitting the DCI and scrambled CRC. In other implementations, the base station assigns the ID of the UE 102 to the UE 102 in an RRC message (e.g., RRC release message or an RRC reconfiguration message) that the base station transmits to the UE 102 before transmitting the DCI and scrambled CRC.

The UE 102 operating in the RRC_INACTIVE or RRC_IDLE state can receive the DCI and scrambled CRC on the PDCCH. Then the UE 102 confirms that the second DL PDU is addressed to the UE in accordance with the ID of the UE 102. The UE 102 then can retrieve the data from the security-protected packet. If the security-protected packet is an encrypted packet, the UE 102 can decrypt the encrypted packet using the appropriate decryption function and the security key to obtain the data. If the security-protected packet is the integrity-protected packet including the data and the MAC-I, the UE 102 can determine whether the MAC-I is valid. If the UE 102 confirms that the MAC-I is valid, the UE 102 retrieves the data. If, however, the UE 102 determines that the MAC-I is invalid, the UE 102 discards the packet. Finally, when the security-protected packet is both encrypted and integrity-protected, with encrypted data and an encrypted MAC-I, the UE 102 can decrypt the encrypted packet and encrypted MAC-I to obtain the data and the MAC-I. The UE 102 then can verify that the MAC-I is valid for the data. If the UE 102 confirms that the MAC-I is valid, the UE 102 retrieves and processes the data. Otherwise, when the UE 102 determines that the MAC-I is invalid, the UE 102 discards the data.

The base station 104 is equipped with processing hardware 130 that can include one or more general-purpose processors (e.g., CPUs) and a non-transitory computer-readable memory storing instructions that the one or more general-purpose processors execute. Additionally or alternatively, the processing hardware 130 can include special-purpose processing units. The processing hardware 130 in an example implementation includes a Medium Access Control (MAC) controller 132 configured to perform a random access procedure with one or more user devices, receive uplink MAC protocol data units (PDUs) to one or more user devices, and transmit downlink MAC PDUs to one or more user devices. The processing hardware 130 can also include a Packet Data Convergence Protocol (PDCP) controller 134 configured to transmit PDCP PDUs in accordance with which the base station 104 can transmit data in the downlink direction, in some scenarios, and receive PDCP PDUs in accordance with which the base station 104 can receive data in the uplink direction, in other scenarios. The processing hardware further can include an RRC controller 136 to implement procedures and messaging at the RRC sublayer of the protocol communication stack. The processing hardware 130 in an example implementation includes an RRC inactive controller 138 configured to manage uplink and/or downlink communications with one or more UEs operating in the RRC_INACTIVE or RRC_IDLE state. The base station 106 can include generally similar components. In particular, components 140, 142, 144, 146, and 148 can be similar to the components 130, 132, 134, 136, and 138, respectively.

The UE 102 is equipped with processing hardware 150 that can include one or more general-purpose processors such as CPUs and non-transitory computer-readable memory storing machine-readable instructions executable on the one or more general-purpose processors, and/or special-purpose processing units. The processing hardware 150 in an example implementation includes an RRC inactive controller 158 configured to manage uplink and/or downlink communications when the UE 102 operates in the RRC_INACTIVE state. The processing hardware 150 in an example implementation includes a Medium Access Control (MAC) controller 152 configured to perform a random access procedure with a base station, transmit uplink MAC protocol data units (PDUs) to the base station, and receive downlink MAC PDUs from the base station. The processing hardware 150 can also include a PDCP controller 154 configured to transmit PDCP PDUs in accordance with which the UE 102 can transmit data in the uplink direction, in some scenarios, and receive PDCP PDUs in accordance with which the UE 102 can receive data in the downlink direction, in other scenarios. The processing hardware further can include an RRC controller 156 to implement procedures and messaging at the RRC sublayer of the protocol communication stack.

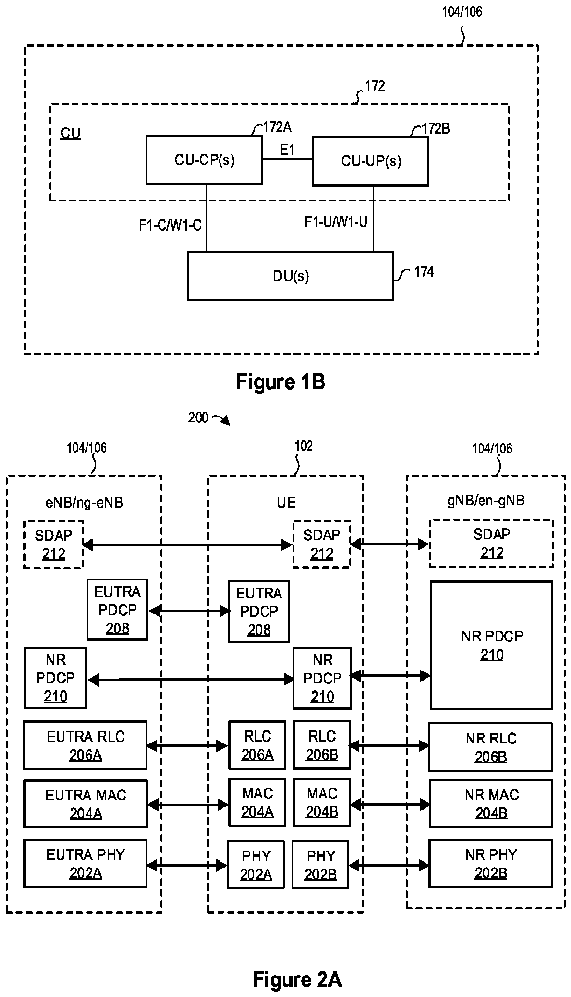

Fig. 1B depicts an example, distributed or disaggregated implementation of any one or more of the base stations 104, 106. In this implementation, the base station includes a central unit (CU) 172 and one or more DUs 174. The CU 172 includes processing hardware, such as one or more general-purpose processors (e.g., CPUs) and a computer-readable memory storing machine-readable instructions executable on the general-purpose processor(s), and/or special-purpose processing units. For example, the CU 172 can include a PDCP controller, an RRC controller and/or an RRC inactive controller such as PDCP controller 134, 144, RRC controller 136, 146 and/or RRC inactive controller 138, 148. In some implementations, the CU 172 can include a radio link control (RLC) controller configured to manage or control one or more RLC operations or procedures. In other implementations, the CU 172 does not include a RLC controller.

Each of the DUs 174 also includes processing hardware that can include one or more general-purpose processors (e.g., CPUs) and computer-readable memory storing machine-readable instructions executable on the one or more general-purpose processors, and/or special-purpose processing units. For example, the processing hardware can include a MAC controller (e.g., MAC controller 132, 142) configured to manage or control one or more MAC operations or procedures (e.g., a random access procedure), and/or a RLC controller configured to manage or control one or more RLC operations or procedures. The processing hardware can also include a physical layer controller configured to manage or control one or more physical layer operations or procedures.

In some implementations, the CU 172 includes a logical node CU-CP 172A that hosts the control plane part of the PDCP protocol of the CU 172. The CU 172 can also include logical node(s) CU-UP 172B that hosts the user plane part of the PDCP protocol and/or Service Data Adaptation Protocol (SDAP) protocol of the CU 172. The CU-CP 172A can transmit control information (e.g., RRC messages, F1 application protocol messages), and the CU-UP 172B can transmit the data packets (e.g., SDAP PDUs or Internet Protocol packets).

The CU-CP 172A can be connected to multiple CU-UP 172B through the E1 interface. The CU-CP 172A selects the appropriate CU-UP 172B for the requested services for the UE 102. In some implementations, a single CU-UP 172B can be connected to multiple CU-CP 172A through the E1 interface. If the CU-CP and DU(s) belong to a gNB, the CU-CP 172A can be connected to one or more DU 174s through an F1-C interface and/or an F1-U interface. If the CU-CP and DU(s) belong to an ng-eNB, the CU-CP 172A can be connected to one or more DU 174s through a W1-C interface and/or a W1-U interface. In some implementations, one DU 174 can be connected to multiple CU-UPs 172B under the control of the same CU-CP 172A. In such implementations, the connectivity between a CU-UP 172B and a DU 174 is established by the CU-CP 172A using Bearer Context Management functions.

Fig. 2A illustrates, in a simplified manner, an example protocol stack 200 according to which the UE 102 can communicate with an eNB/ng-eNB or a gNB (e.g., one or more of the base stations 104, 106).

In the example stack 200, a physical layer (PHY) 202A of EUTRA provides transport channels to the EUTRA MAC sublayer 204A, which in turn provides logical channels to the EUTRA RLC sublayer 206A. The EUTRA RLC sublayer 206A in turn provides RLC channels to a EUTRA PDCP sublayer 208 and, in some cases, to an NR PDCP sublayer 210. Similarly, the NR PHY 202B provides transport channels to the NR MAC sublayer 204B, which in turn provides logical channels to the NR RLC sublayer 206B. The NR RLC sublayer 206B in turn provides data transfer services to the NR PDCP sublayer 210. The NR PDCP sublayer 210 in turn can provide data transfer services to Service Data Adaptation Protocol (SDAP) 212 or a radio resource control (RRC) sublayer (not shown in Fig. 2A). The UE 102, in some implementations, supports both the EUTRA and the NR stack as shown in Fig. 2A, to support handover between EUTRA and NR base stations and/or to support DC over EUTRA and NR interfaces. Further, as illustrated in Fig. 2A, the UE 102 can support layering of NR PDCP 210 over EUTRA RLC 206A, and SDAP sublayer 212 over the NR PDCP sublayer 210.

The EUTRA PDCP sublayer 208 and the NR PDCP sublayer 210 receive packets (e.g., from an Internet Protocol (IP) layer, layered directly or indirectly over the PDCP layer 208 or 210) that can be referred to as service data units (SDUs), and output packets (e.g., to the RLC layer 206A or 206B) that can be referred to as protocol data units (PDUs). Except where the difference between SDUs and PDUs is relevant, this disclosure for simplicity refers to both SDUs and PDUs as "packets."

On a control plane, the EUTRA PDCP sublayer 208 and the NR PDCP sublayer 210 can provide signaling radio bearers (SRBs) or RRC sublayer (not shown in Fig. 2A) to exchange RRC messages or non-access-stratum (NAS) messages, for example. On a user plane, the EUTRA PDCP sublayer 208 and the NR PDCP sublayer 210 can provide data radio bearers (DRBs) to support data exchange. Data exchanged on the NR PDCP sublayer 210 can be SDAP PDUs, Internet Protocol (IP) packets, or Ethernet packets.

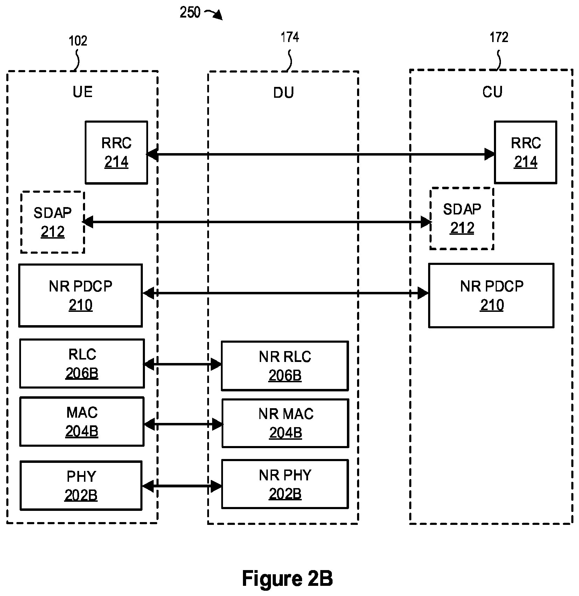

Thus, it is possible to functionally split the radio protocol stack, as shown by the radio protocol stack 250 in Fig. 2B. The CU at any of the base stations 104 or 106 can hold all the control and upper layer functionalities (e.g., RRC 214, SDAP 212, NR PDCP 210), while the lower layer operations (e.g., NR RLC 206B, NR MAC 204B, and NR PHY 202B) are delegated to the DU. To support connection to a 5GC, NR PDCP 210 provides SRBs to RRC 214, and NR PDCP 210 provides DRBs to SDAP 212 and SRBs to RRC 214.

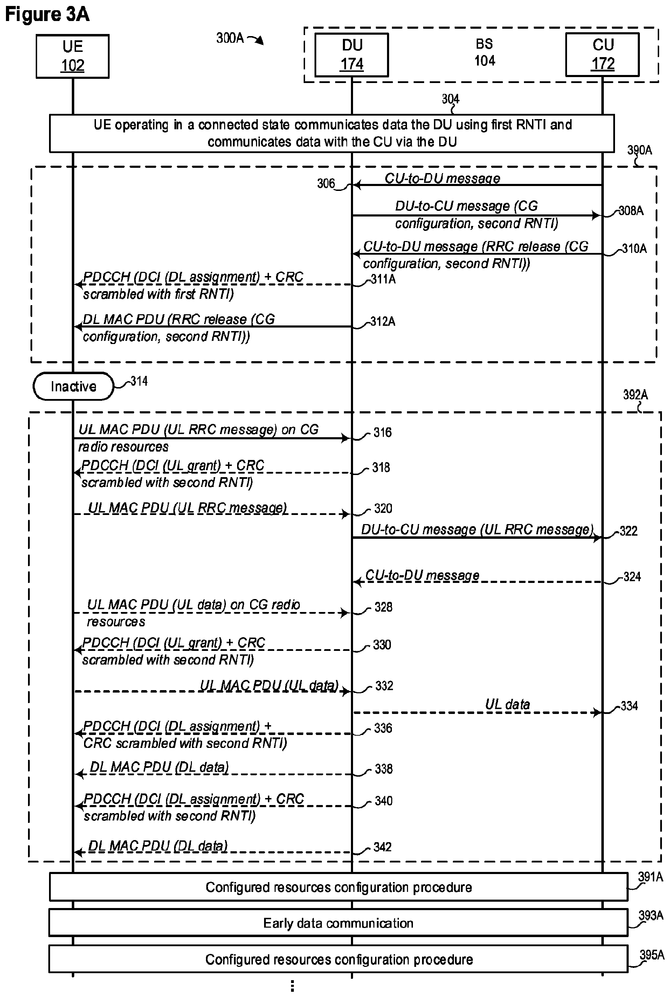

Next, several example scenarios that involve several components of Fig. 1A and relate to communicating data with configured resources (i.e., configured uplink grant(s) and/or configured downlink assignment(s)) while a UE operates in an inactive or idle state are discussed with reference to Figs. 3A-5F. To simplify the following description, the "inactive state" is used to represent the RRC_INACTIVE or RRC_IDLE state, unless otherwise noted. Generally speaking, events in Figs. 3A-3B, Figs. 4A-4B, and 5A-5F that are the same are labeled with the same reference numbers (e.g., event 304 is the same in Figs. 3A-3B), and events in Figs. 3A-5F that are similar are labeled with similar reference numbers (e.g., event 390A is similar to event 390B, 490, and 590.

Referring first to Fig. 3A, in a scenario 300A, the UE 102 initially operates in a connected state (e.g., RRC_CONNECTED) with the base station 104 including a CU 172 and a DU 174. The UE 102 operating in the connected state communicates 304 data with the DU 174 using a first RNTI and communicates 304 the data with the CU via the DU. In some implementations, the DU 174 can send 304 to the UE 102 first downlink control information commands (DCIs), each with a CRC scrambled with the first RNTI. The DU 174 includes a particular uplink (UL) grant in each of the first DCIs. The UE 102 transmits 304 data to the DU 174 in accordance with the UL grants, which the DU 174 can in turn send to the CU 172.

In other implementations, the DU 174 can send 304 to the UE 102 second DCIs, each with a CRC scrambled with the first RNTI. The DU 174 includes a particular downlink (DL) assignment in each of the second DCIs. The DU 174 transmits 304 data to the UE 102 in accordance with the DL assignments. The DU 174 can generate the data or receive the data from the CU 172.

In some implementations, the UE 102 performs a random access procedure with the DU 174. The DU 174 includes the first RNTI in a random access response or message B of the random access procedure. The DU 174 also sends a DU-to-CU message including the first RNTI to the CU 172. In other implementations, the UE 102 can receive the first RNTI in a handover command message (e.g., RRC reconfiguration message) from another base station (e.g., base station 106) directly or via a CN 110 (e.g., MME 114 or SMF 164). In some implementations, the first RNTI can be a C-RNTI.

After a certain period of data inactivity for the UE 102, the CU 172 can determine that neither the CU 172 nor the UE 102 has transmitted any data in the downlink direction or the uplink direction, respectively, during the certain period. In some implementations, the CU 172 can make the determination based on a DU-to-CU message received from the DU 174 that indicates data inactivity of the UE 102. In response to the determination, the CU 172 performs 390A a configured resources configuration procedure. In the configured resources configuration procedure, the CU 172 sends 306 a CU-to-DU message to the DU 174 to obtain a configured grant (CG) configuration (e.g., encoded as an RRC IE).

The CU-to-DU message that the CU 172 transmits may be a UE Context request message (e.g., a *UE Context Setup Request* message or a *UE Context Modification Request* message). In response to receiving 306 the CU-to-DU message, the DU 174 assigns a second RNTI for the UE 102 and sends 308A to the CU 172 a DU-to-CU message including a CG configuration and the second RNTI. The DU-to-CU message may be a UE Context response message (e.g., a *UE Context Setup Response* message or a *UE Context Modification Response* message). The CG configuration indicates resources on which the UE 102 can transmit uplink transmissions to the DU 174 while operating in an inactive state (i.e., uplink resources for performing early data communication). In some implementations, the DU 174 can assign the second RNTI to the same value as the first RNTI. In other implementations, the DU 174 can assign the second RNTI to a value different from the value of the first RNTI. Then, the CU 172 generates an RRC release message (e.g., *RRCRelease* message or *RRCConnectionRelease* message) to instruct the UE 102 to transition to the inactive state. The CU 172 includes the CG configuration and the second RNTI in the RRC release message.

In some implementations, the DU 174 includes the CG configuration and the second RNTI in separate fields or IEs of the DU-to-CU message 308A. In other implementations, the DU 174 includes the second RNTI in the CG configuration and includes the CG configuration in a single field or IE of the DU-to-CU message 308A. In such cases, the second RNTI included in the CG configuration can be transparent to the CU 172. In some scenarios and implementations, the CU 172 needs to know the second RNTI. Thus, the CU 172 can decode the CG configuration to obtain the second RNTI. In other implementations, the DU 174 can include an additional instance of the second RNTI as an IE (e.g., F1AP IE or W1AP IE) of the DU-to-CU message 308A in addition to including the second RNTI in the CG configuration. Thus, the CU 172 can directly obtain the second RNTI from the IE of the DU-to-CU message 308A without decoding the CG configuration.

In some implementations, the second RNTI can be a preconfigured uplink resources RNTI (PUR-RNTI). In other implementations, the second RNTI can be a configured scheduling RNTI (CS-RNTI) for the inactive state. The CU 172 can assign an *I-RNTI* or a resume ID to the UE 102 and include the assigned value in the RRC release message. Subsequently, the CU 172 sends 310A a CU-to-DU message including the RRC release message to the DU 174, which in turn sends 312A the RRC release message to the UE 102 in a DL MAC PDU. Prior to sending 312A the DL MAC PDU to the UE 102, the DU 174 may transmit 311A a DCI and a CRC scrambled using the first RNTI to the UE 102. The DCI may include a DL assignment indicating a resource on which the UE 102 can receive 312 the DL MAC PDU. In details, the DL assignment includes at least a modulation and coding format, resource allocation, and/or HARQ information related to a HARQ transmission including the DL MAC PDU.

The UE 102 transitions to the inactive state upon receiving the RRC release message and operates 314 in the inactive state. At a later time, the UE 102 in the inactive state initiates early data communication to transmit uplink (UL) data or receive downlink (DL) data. The UE 102 can initiate early data communication in order to transmit at least one UL data packet or to receive at least one DL data packet. In cases where the UE 102 initiates early data transmission (EDT) to transmit UL data while the UE 102 is in the inactive state, the initial early data communication can be mobile originating (MO) EDT. In cases where the UE 102 initiates early data communication to receive DL data while the UE 102 is in the inactive state, the initial early data communication can be mobile terminating (MT) EDT (i.e., early data reception from the viewpoint of the UE 102). In such cases, the UE 102 at event 314 receives from the DU 174 a paging message, which includes a UE ID of the UE 102 and an EDT indication. For example, the UE ID can be an *I-RNTI,* resume ID, or a NAS ID (e.g., S-TMSI or 5G-S-TMSI, or a specific ID for MT EDT). In response to the paging message (i.e., the UE ID and the EDT indication), the UE 102 initiates early data communication to receive DL data from the DU 174 and CU 172.

In response to or after initiating early data communication, the UE 102 generates an initial UL MAC PDU including a UL RRC message and transmits 316 (a HARQ transmission of) the initial UL MAC PDU on configured resources in the CG configuration (i.e., CG radio resources) to the DU 174. In some implementations, the UE 102 can include initial UL data in the initial UL MAC PDU in addition to the UL RRC message to perform MO EDT. In other implementations, in order to perform MT EDT, the UE 102 does not include initial UL data in the initial UL MAC PDU. In some implementations, the initial UL data include PDCP PDU(s), RLC PDU(s), RRC PDU(s), NAS PDU(s), and/or IP packet(s). In other implementations, the initial UL data includes user-plane data and/or control-plane data. The user-plane data may include Internet of things (IoT) data, Ethernet traffic data, Internet traffic data, or a short message service (SMS) message. The control-plane data may include RRC message(s) and/or NAS message(s).

If the DU 174 fails to properly receive 316 the initial UL MAC PDU, the DU 174 can send 318 a DCI and a CRC scrambled with the second RNTI on a physical downlink control channel (PDCCH) to indicate to the UE 102 to retransmit the initial UL MAC PDU. More specifically, the DU 174 generates the DCI including a UL grant, generates a CRC from the DCI, and scrambles the CRC with the second RNTI. The UE 102 transmits 320 (a HARQ retransmission of) the initial UL MAC PDU. If the DU 174 fails to receive the initial UL MAC PDU from decoding a combination of the HARQ transmission and the HARQ retransmission, the DU 174 can transmit to the UE 102 subsequent DCI(s), each with a CRC scrambled with the second RNTI, similar to event 318. In accordance with or in response to each of the subsequent DCI(s), the UE 102 can transmit a HARQ retransmission of the initial UL MAC PDU, similar to event 320. The DU 174 can decode a combination of the HARQ transmission and the HARQ retransmission(s) to obtain the initial UL MAC PDU.

After the DU 174 receives the initial UL MAC PDU, the DU 174 retrieves the UL RRC message from the initial UL MAC PDU and generates a DU-to-CU message including the UL RRC message. Then, the DU 174 sends 322 the DU-to-CU message to the CU 172. In some implementations, the DU-to-CU message can be an F1 application protocol (F1AP) message or a W1 application protocol (W1AP) message. In other implementations, the DU-to-CU message 322 can be an *Initial UL RRC Message Transfer* message or a *UL RRC Message Transfer* message.

In some implementations, the UE 102 at event 316 uses the first RNTI, rather than the second RNTI, to generate a MAC-I and includes the MAC-I in the UL RRC message. The CU 172 verifies the MAC-I based on first RNTI when receiving 322 the UL RRC message. In some implementations, the MAC-I can be a *resumeMAC-I* and the UE 102 can set the *resumeMAC-I* to the 16 least significant bits of the MAC-I calculated: over the ASN.1 encoded as per clause 8 (i.e., a multiple of 8 bits) a *VarResumeMAC-Input;* with an integrity key K_{RRCint} key in a UE Inactive AS Context of the UE 102 and a previously configured integrity protection algorithm that the UE 102 used at event 304; and with all input bits for COUNT, BEARER and DIRECTION set to binary ones.

The *VarResumeMAC-Input* is described as below: 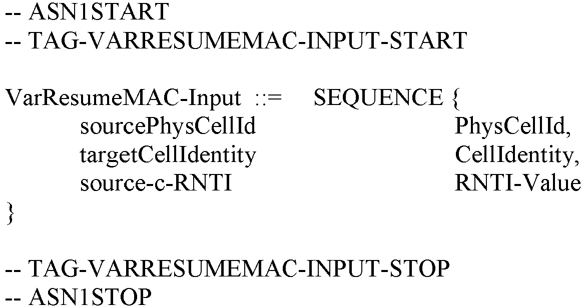 The UE 102 sets the *sourcePhysCellId* field to a physical cell identity (PCI) of the cell 124 and sets the *targetCellIdentity* field to a cell identity of the cell 124. The UE 102 sets the source-c-RNTI to the value of the first RNTI.

Alternatively, the UE 102 uses the second RNTI to generate a MAC-I instead of the first RNTI and includes the MAC-I in the UL RRC message. The CU 172 verifies the MAC-I based on the second RNTI when receiving 322 the UL RRC message. In this case, the UE 102 sets the source-c-RNTI to the value of the second RNTI.

In some implementations, the DU 174 includes a third RNTI in the DU-to-CU message that the DU 174 transmits 322. In such cases, the CU 172 refrains from using the third RNTI to verify the MAC-I. In some implementations, the third RNTI can be a C-*RNTI.* In some implementations, the CU 172 can ignore the third RNTI. Further, in some implementations, the DU 174 includes a radio configuration for the UE 102 in the DU-to-CU message that the DU 174 transmits. The radio configuration may be a configuration which the UE 102 can use following a state transition from the inactive state to the connected state.

After receiving 322 the DU-to-CU message, the CU 172 in some implementations can send 324 a CU-to-DU message (e.g., a *UE Context Setup Request* message or a *UE Context Modification Request* message) to the DU 174 to request the DU 174 establish or modify a UE context for the UE 102. In some implementations, the CU 172 can do so if the CU 172 verifies the MAC-I is valid. In some implementations, the CU 172 can ignore the third RNTI, if the CU 172 verifies the MAC-I is valid. In response to receiving 324 the CU-to-DU message, the DU 174 can establish or modify a UE context for the UE 102 and send a DU-to-CU message (e.g., a *UE Context Setup Response* message or a *UE Context Modification Response* message) to the CU 172 (not shown). In some implementations, the DU 174 includes a radio configuration for the UE 102 in the DU-to-CU message that the DU 174 transmits in response to receiving 324 the CU-to-DU message. Further, the DU 174 may include an RNTI in the DU-to-CU message that the DU 174 transmits in response to receiving 324 the CU-to-DU message. The RNTI may be the third RNTI (e.g., instead of including a third RNTI in the DU-to-CU message that the DU transmits 322, the DU can include the third RNTI in the DU-to-CU message that is in response to the CU-to-DU message at event 324).

After transmitting 316 the initial UL MAC PDU, the UE 102 can send subsequent UL MAC PDU(s) including subsequent UL data to the DU 174 on CG radio resources. For example, the UE 102 can send 328 (a HARQ transmission of) a subsequent UL MAC PDU including subsequent UL data to the DU 174 on CG radio resources. If the DU 174 fails to properly receive 328 the initial UL MAC PDU, the DU 174 can send 330 a DCI and a CRC scrambled with the second RNTI on a PDCCH to indicate the UE 102 to retransmit the subsequent UL MAC PDU similar to the earlier event 318. More specifically, the DU 174 generates the DCI including a UL grant, generates a CRC from the DCI, and scrambles the CRC with the second RNTI. The UE 102 transmits 332 (a HARQ retransmission of) the subsequent UL MAC PDU. If the DU 174 fails to receive the subsequent UL MAC PDU from decoding a combination of the HARQ transmission and the HARQ retransmission, the DU 174 can transmit to the UE 102 subsequent DCI(s) each with a CRC scrambled with the second RNTI, similar to events 330. In accordance with or in response to each of the subsequent DCI(s), the UE 102 can transmit a HARQ retransmission of the subsequent UL MAC PDU, similar to event 332. The DU 174 can decode a combination of the HARQ transmission and the HARQ retransmission(s) to obtain the subsequent UL MAC PDU. After the DU 174 receives the subsequent UL data, the DU 174 can send 334 the UL data to the CU 172, e.g., via a control-plane interface (e.g., F1-C or W1-C) or a user-plane interface (e.g., F1-U or W1-U). In some implementations, the subsequent UL data includes PDCP PDU(s), RLC PDU(s), RRC PDU(s), NAS PDU(s), and/or IP packet(s). The RLC PDU(s) include RLC data PDU(s) and/or RLC control PDU(s). In other implementations, the subsequent UL data includes user-plane data and/or control-plane data. The user-plane data may include Internet of things (IoT) data, Ethernet traffic data, Internet traffic data, or a short message service (SMS) message. The control-plane data may include RRC message(s) and/or NAS message(s).

After receiving 320 the UL MAC PDU or the initial UL data, sending 322 the DU-to-CU message, or receiving 324 the CU-to-DU message, the DU 174 can send DL MAC PDU(s) including DL data to the UE 102 on dynamic radio resources. For example, the DU 174 can send 336 a DCI and a CRC scrambled with the second RNTI on a PDCCH to transmit (a HARQ transmission of) a DL MAC PDU. More specifically, the DU 174 generates the DCI including a DL assignment, generates a CRC from the DCI, and scrambles the CRC with the second RNTI. Then, the DU 174 transmits 338 (a HARQ transmission of) a DL MAC PDU including DL data to the UE 102 on radio resources allocated in the DCI 336 (i.e., dynamic radio resources). The UE 102 receives 338 (the HARQ transmission of) the DL MAC PDU on the dynamic resources in accordance with the DCI 336. If the UE 102 fails to properly receive 338 the DL MAC PDU, the UE 102 can send a HARQ negative acknowledgement (NACK) to the DU 174 (not shown). In response to the HARQ NACK, the DU 174 can send 340 a DCI and a CRC scrambled with the second RNTI on a PDCCH to retransmit the DL MAC PDU. More specifically, the DU 174 generates the DCI including a DL assignment, generates a CRC from the DCI, and scrambles the CRC with the second RNTI. The DU 174 transmits 342 (a HARQ retransmission of) the DL MAC PDU on radio resources allocated in the DCI 340 (i.e., dynamic radio resources). If the UE 102 fails to receive the DL MAC PDU from decoding a combination of the HARQ transmission and the HARQ retransmission, the UE 102 transmits a HARQ NACK to the DU 174 (not shown), and the DU 174 can transmit to the UE 102 a subsequent DCI with a CRC scrambled with the second RNTI and transmit to the UE 102 (a HARQ retransmission of) the DL MAC PDU, similar to events 340 and 342. In accordance with or in response to each of the subsequent DCI(s), the UE 102 can receive a HARQ retransmission of the DL MAC PDU, similar to event 342. The UE 102 can decode a combination of the HARQ transmission and the HARQ retransmission(s) to obtain the DL MAC PDU. If the UE 102 receives the DL data, the UE 102 can send a HARQ acknowledgement (HARQ ACK) to the DU 174 (not shown).

In some implementations, the DL data includes PDCP PDU(s), RLC PDU(s), RRC PDU(s), NAS PDU(s), and/or IP packet(s). The DL PDU(s) include RLC data PDU(s) and/or RLC control PDU(s). The DU 174 can receive the DL data from the CU 172 and generates the RLC data PDU(s) or DL MAC PDU(s) to include the DL data. The DU 174 generates the RLC control PDU(s) (e.g., RLC Status PDU(s) to acknowledge or negatively acknowledge reception of a UL RLC PDU). In other implementations, the DL data includes user-plane data and/or control-plane data. The user-plane data may include Internet of things (IoT) data, Ethernet traffic data, Internet traffic data, or a short message service (SMS) message. The control-plane data may include RRC message(s) and/or NAS message(s).

In alternative implementations, the DU 174 does not transmit an RNTI to the UE 102 via the CU 172 (i.e., via events 308A, 310A, 311A, and 312A). In such cases, the DU 174 uses the first RNTI to scramble the CRCs in the events 320, 330, 336, 340 and the UE 102 uses the first RNTI to verify the CRCs in the events 320, 330, 336, 340. The CU 172 can assign an I-RNTI or a resume ID to the UE 102 and include the assigned value in the RRC release message.

The events 316, 318, 320, 322, 324, 328, 330, 332, 334, 336, 338, 340 and 342 are collectively referred to in Fig. 3A as an early data communication 392A.

After a certain period of data inactivity for the UE 102, the CU 172 can perform 391A a configured resources configuration procedure with the UE 102 via the DU 174, similar to the configured resources configuration procedure 390A. During the configured resources configuration procedure, the UE 102 stops performing early data communication with the base station 104. Later in time, the UE 102 can perform 393A a subsequent early data communication procedure via configured resources in a CG configuration received in the configured resources configuration procedure 391A, similar to the early data communication 392A. After a certain period of data inactivity for the UE 102, the CU 172 can perform 395A a configured resources configuration procedure with the UE 102 via the DU 174, similar to the configured resources configuration procedure 390A. In some implementations, the DU 174 can include a fourth RNTI in a DU-to-CU message in the configured resources configuration procedure 391A (i.e., in a DU-to-CU message during the configured resources configuration procedure 391A at an event similar to event 308A). In some implementations, the DU 174 can set the fourth RNTI to the value of the second RNTI. In other implementations, the DU 174 can set the fourth RNTI to a different value from the second RNTI. The DU 174 and the CU 172 can then use the fourth RNTI during the subsequent early data communication 393A. In yet other implementations, the DU 174 does not include an RNTI in the DU-to-CU message. In such cases, the UE 102, DU 174, and CU 172 determine the second RNTI is valid and retain the second RNTI for the subsequent early data communication procedure 393A.

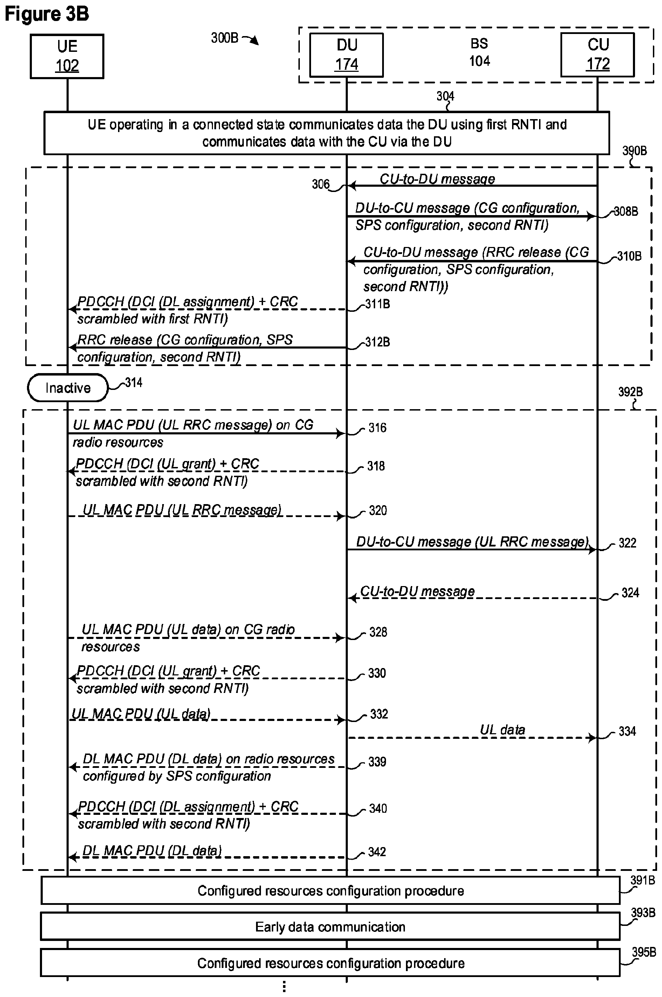

Turning to Fig. 3B, a scenario 300B is similar to the scenario 300A, except that the DU 174 may transmit a semi-persistent scheduling (SPS) configuration to the CU 172 in addition to the CG configuration. In particular, during the configured resources configuration procedure 390B, in response to receiving 306 the CU-to-DU message, the DU 174 assigns a second RNTI for the UE 102 and sends 308B a DU-to-CU message to the CU 172. In the CU-to-DU message, the DU 174 includes a CG configuration, an SPS configuration, and the second RNTI. The SPS configuration indicates resources on which the UE 102 can receive downlink transmissions from the DU 174 while operating in an inactive state (i.e., downlink resources for performing early data communication). In other scenarios, the DU 174 can include an SPS configuration and the second RNTI in the CU-to-DU message and exclude a CG configuration from the CU-to-DU message.

Similar to the scenario 300A, in some implementations, the DU 174 includes the CG configuration, the SPS configuration, and the second RNTI in separate fields or IEs of the DU-to-CU message 308B. In other implementations, the DU 174 includes the second RNTI in the CG configuration and the SPS configuration, and includes each of the CG configuration and the SPS configuration in separate fields or IEs of the DU-to-CU message 308B. In such cases, the second RNTI included in the CG configuration and/or the SPS configuration can be transparent to the CU 172. The CU 172 can decode the CG configuration and/or the SPS configuration to obtain the second RNTI. In other implementations, the DU 174 can include an additional instance of the second RNTI as an IE (e.g., F1AP IE or W1AP IE) of the DU-to-CU message 308B in addition to including the second RNTI in the CG configuration and SPS configuration. Thus, the CU 172 can directly obtain the second RNTI from the IE of the DU-to-CU message 308B without decoding the CG configuration or SPS configuration.

After receiving 310B the DU-to-CU message, the CU 172 generates an RRC release message including the CG configuration, the SPS configuration, and the second RNTI and transmits 310B a CU-to-DU message to the DU including the RRC release message. The DU 174 can then extract the RRC release message from the CU-to-DU message and transmit 312B the RRC release message to the UE 102. The UE 102 transitions to the inactive state upon receiving the RRC release message and operates 314 in the inactive state.

While the UE 102 operates 314 in the inactive state, the CU 172, the DU 174, and the UE 102 perform an early data communication procedure 392B, which is generally similar to the early data communication procedure 392A. However, rather than transmit a DCI to indicate a downlink assignment, similar to event 336, the DU 174 can directly send 339 a DL MAC PDU including DL data to the UE 102 on radio resources configured by the SPS configuration. If the UE 102 fails to receive 339 the DL MAC PDU, the UE 102 can send a HARQ NACK to the DU 174. In response to the HARQ NACK, the DU 174 can send 340 a DCI and a CRC scrambled with the second RNTI on a PDCCH to retransmit the DL MAC PDU.

Configured resources configuration procedure 391B is similar to the configured resources configuration procedure 391A, except that the configured resources configuration(s) may include a CG configuration and/or an SPS configuration. In some scenarios and implementations, the DU 174 can send DL MAC PDU(s) including DL data to the DU 174 on dynamic radio resources while configuring the SPS configuration to the UE 102, as described for Fig. 3A.

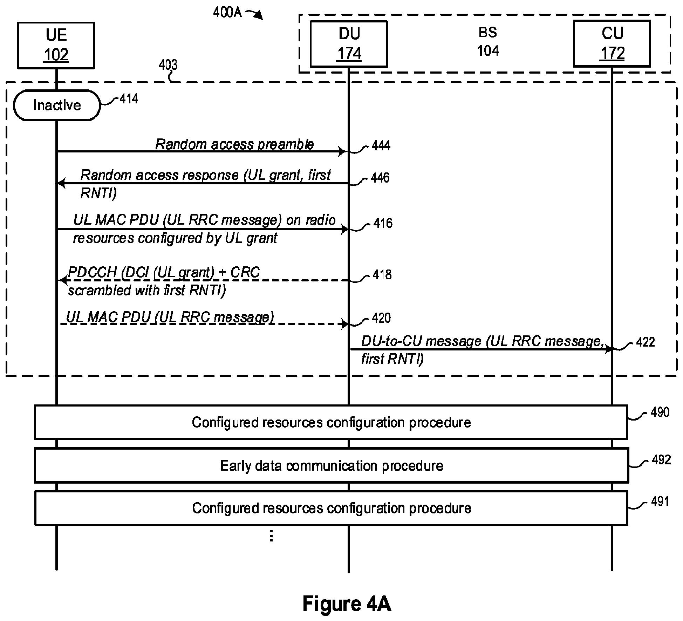

Turning to Fig. 4A, a scenario 400A is similar to the scenario 300A, but where the UE 102 initially operates 414 in an inactive state rather than a connected state. To transmit data while operating 414 in the inactive state, the UE 102 performs 403 a random access procedure with the base station 104. The UE 102 initiates the random access procedure by transmitting 444 a random access preamble to the DU 174. The DU 174 generates a first RNTI for the UE 102 and includes the first RNTI in a random access response of the random access procedure. The DU 174 also sends 422 a DU-to-CU message including the first RNTI to the CU. For example, the first RNTI can be a C-RNTI.

The DU 174 transmits 446 the random access response including the first RNTI, a timing advance command, an ID of the random access preamble, and an uplink grant to the UE 102. The uplink grant indicates resources that the UE 102 can utilize to perform EDT with the DU 174 while operating 414 in the inactive state. In response to receiving 446 the random access response, the UE 102 transmits 416 an UL MAC PDU including an UL RRC message on resources configured by the uplink grant. The UE 102 can also include an uplink data packet in the UL MAC PDU. If the DU 174 successfully receives the UL MAC PDU, the DU 174 can transmit a contention resolution to the UE 102 to complete the random access procedure 403 (not shown). If the DU 174 fails to receive the UL MAC PDU in accordance with the UL grant, the DU 174 can send 418 a DCI and a CRC scrambled with the first RNTI on a PDCCH to indicate to the UE 102 to retransmit the UL MAC PDU. The UE 102 can then retransmit 420 the UL MAC PDU including the UL RRC message to the DU 174.

After receiving 422 the DU-to-CU message including the UL RRC message and first RNTI, the CU 172 may determine to request a configured resources configuration for the UE 102 from the DU 174. The CU 172 can then initiate a configured resources configuration procedure 490, which can be similar to the configured resources configuration procedure 390A or 390B. After the configured resources configuration procedure 490, the UE 102 remains in the inactive state. The UE 102 and the base station 104 can then perform 492 early data communication procedure, which can be similar to early data communication procedure 392A or 392B. After a certain period of data inactivity for the UE 102, the CU 172 can perform 491 a configured resources configuration procedure with the UE 102 via the DU 174, similar to the configured resources configuration procedure 490.

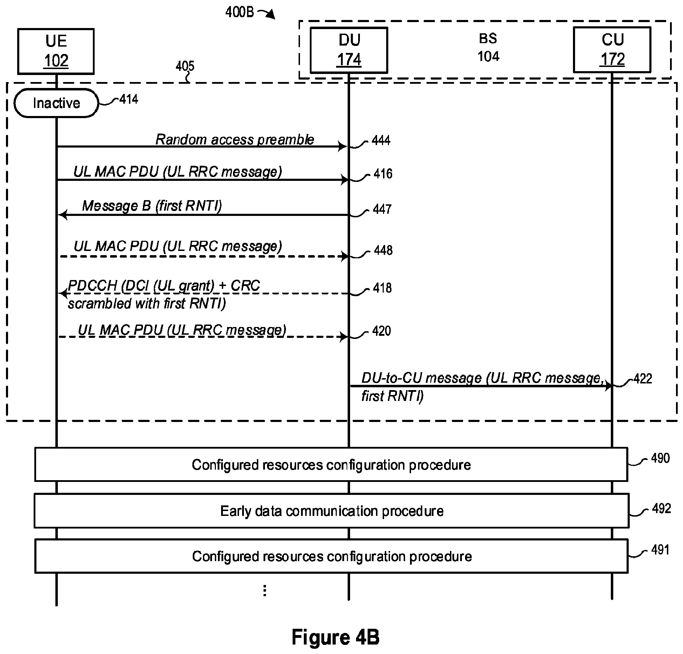

In the scenario 400A, the random access procedure that the UE 102 performs 403 is a four-step random access procedure, where the four steps of the random access procedure correspond to events 444, 446, 416, and the transmission of the contention resolution to the UE 102. Fig. 4B illustrates a scenario 400B, which is similar to the scenario 400A, except that that the UE 102 performs 405 a two-step random access procedure with the base station 104 to transmit data while operating 414 in the inactive state

To initiate the two-step random access procedure, the UE 102 transmits 444 a random access preamble to the DU 174 and transmits 416 an UL MAC PDU including an UL RRC message to the DU 174. The UL MAC PDU may also include an UL data packet. In some implementations, prior to the event 444, the UE 102 may receive the random access preamble in an RRC message that causes the UE to transition to the inactive state. In some implementations, prior to event 444, the DU 174 broadcasts a system information block (SIB) on the cell 124. The SIB includes configuration(s) for the UE 102 to perform a two-step random access procedure on the cell 124. The UE 102 receives the SIB and transmits 416 an initial UL MAC PDU on radio resources indicated by the configuration(s).

In Fig. 4B, the events 444 and 416 may collectively be referred to as a "Message A" of the two-step random access procedure. The random access preamble and the payload are two parts of the Message A that are sent at different occasions. For example, the UE 102 can transmit 444 the random access preamble via a Physical Random Access Channel (PRACH) occasion, and transmit 416 the payload via a Physical Uplink Shared Channel (PUSCH) occasion. In response to the Message A, the DU 174 transmits 447 a "Message B" including a first RNTI, to the UE 102. In some scenarios and implementations, the Message B may include a successRAR MAC subheader and a successRAR MAC subPDUa, which indicates that the DU 174 successfully received the UL MAC PDU 416. The successRAR MAC subPDU includes a contention resolution identity, timing advance command, and the first RNTI. The successRAR MAC subPDU can further include PUCCH Resource Indicator, HARQ Feedback Timing Indicator, Transmit Power Control (TPC) command, and/or channel access type and CP extension. In other scenarios and implementations, the Message B may include a fallbackRAR MAC subheader and a fallbackRAR MAC subPDU, which indicates to the UE 102 to retransmit the UL MAC PDU that the UE 102 transmits at event 416. The fallbackRAR MAC subPDU includes a UL grant, timing advance command, the first RNTI. The UE 102 retransmits 448 the UL MAC PDU to the DU 174 in accordance with the UL grant. If the DU 174 successfully receives 448 the UL MAC PDU, the DU 174 can send a contention resolution to the UE 102 to complete the random access procedure.

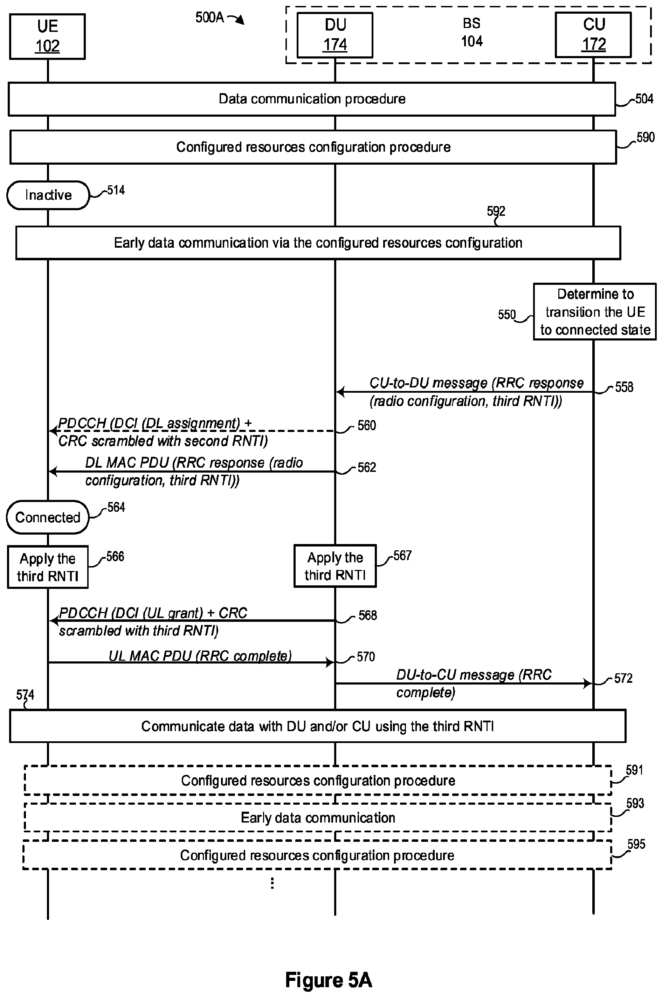

Turning to Fig. 5A, a scenario 500A begins similarly to any one of the scenarios 300A-B or 400A-B, but the CU 172 determines to transition the UE 102 to the connected state. Initially, the UE 102 performs 504 a data communication procedure with the base station 104. The data communication procedure 504 can be similar to event 304 (i.e., the UE 102 can initially operate in the connected state), or random access procedure 403 or 405 (i.e., the UE 102 can initially operate in the inactive state and perform a random access procedure to communicate with the base station 104 while operating in the inactive state). The CU 172 can perform 590 a configured resources configuration procedure with the DU 174 and the UE 102, which may be similar to the configured resources configuration procedure 390A, 390B, or 490. If the UE 102 initially operates in the connected state during the connected state during event 504, then the UE 102 transitions 514 to the inactive state in response to the configured resources configuration procedure 590. If the UE 102 operates in the inactive state during event 504, then the UE 102 remains 514 in the inactive state. The UE 102 can then perform 592 early data communication with the base station 104 in accordance with the configured resources configuration that the UE 102 received during the configured resources configuration procedure 590. The early data communication procedure 592 may be similar to early data communication procedure 392A, 392B, or 492.

At a later time, the CU 172 determines 550 to transition the UE 102 to the connected state. In response, the CU 172 sends 558 a CU-to-DU message to the DU 174 including an RRC response message (e.g., an RRC setup message or an RRC resume message). In the RRC response message, the CU 172 includes a radio configuration for the UE 102 and a third RNTI. The radio configuration is a configuration that the UE 102 can use to communicate with the DU 174 after transitioning to the connected state. The CU 172 may receive the radio configuration and the third RNTI from the DU 174 during the early data communication procedure 592. For example, the CU 172 may receive the radio configuration and the third RNTI from the DU 174 in a DU-to-CU message that the DU 174 transmits to the CU 172 during the early data communication procedure (e.g., at an event during the early data communication procedure 592 similar to event 322 or the DU-to-CU message that the DU 174 transmits in response to receiving 324 the CU-to-DU message).

In response to receiving 558 the CU-to-DU message, the DU 174 may transmit 560 a DCI and a CRC scrambled with the second RNTI (i.e., the RNTI the DU 174 assigns to the UE 102 during the configured resources configuration procedure 590) on a PDCCH. The DCI indicates a DL assignment on which the UE 102 can receive 562 a DL MAC PDU. In implementations in which the UE 102 obtains an SPS configuration from the DU 174 during the configured resources configuration procedure 590, the DU 174 may refrain from transmitting 560 the DCI. Alternatively, the DU 174 still transmits 560 the DCI even though the UE 102 obtains the SPS configuration. The DU 174 may do so because there is no SPS radio resource available for transmission at a particular time slot where the DU 174 determines to transmit 562 the RRC response message.

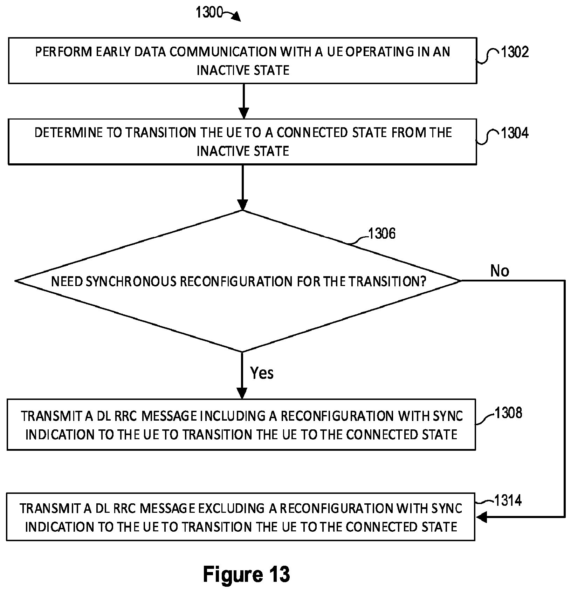

The DU 174 then sends 562 a DL MAC PDU to the UE 102, where the DL MAC PDU includes the RRC response message that the DU 174 received 558 from the CU 172. In response to the RRC response message, the UE 102 transitions 564 to the connected state (e.g., RRC_CONNECTED) and applies 566 the third RNTI. The DU 174 also applies 567 the third RNTI. In some implementations, to request that the DU 174 and the UE 102 apply 567, 566 the third RNTI synchronously, the CU 102 includes a reconfiguration with sync indication (e.g., a *ReconfigurationWithSync* IE) in the RRC response message. The reconfiguration with sync indication causes the UE 102 to perform a random access procedure with the UE 102, during which the UE 102 and the DU 174 can apply 566, 567 the third RNTI. The reconfiguration with sync indication is further discussed with reference to Fig. 13. After applying 566, 567 the third RNTI, the UE 102 and the DU 174 can release or discard the second RNTI. In some implementations, the UE 102 and the DU 174 also release or discard the first RNTI.

After applying 566 the third RNTI, the UE 102 transmits 570 an UL MAC PDU including an RRC complete message to the DU 174 (i.e., in response to receiving 562 the RRC response message), which the DU 174 in turn sends 572 to the CU 172 in a DU-to-CU message. In some implementations, the UE 102 transmits 570 the UL MAC PDU using an UL grant indicated in a DCI that the DU transmits 568. In particular, after applying 567 the third RNTI, the DU 174 may transmit 568 the DCI and a CRC scrambled using the third RNTI. The UE 102 can then communicate with the DU 174, and with the CU 172 via the DU 174, using the third RNTI. The DU 174, for example, can transmit DCIs to the UE 102 with CRCs scrambled using the third RNTI.

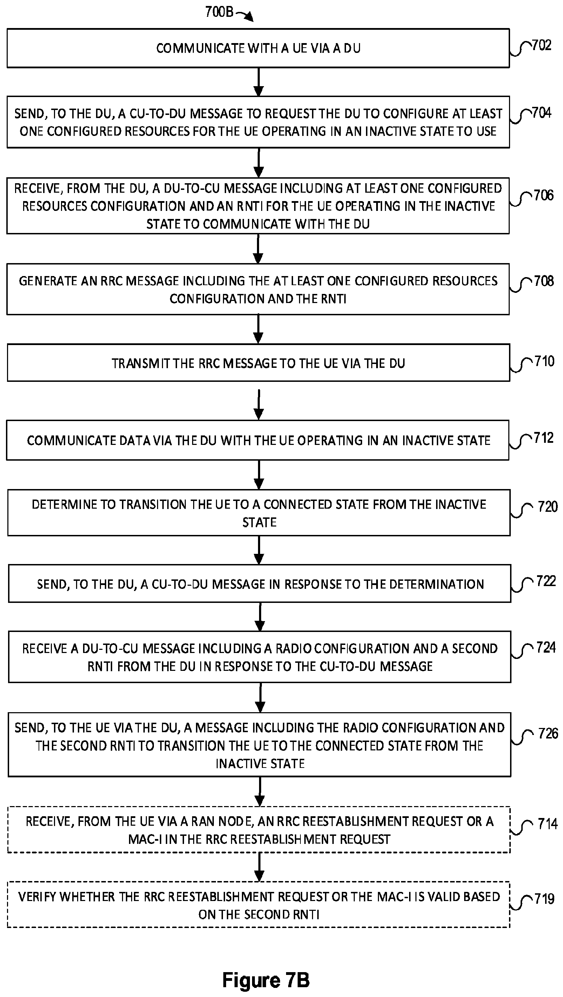

As will be also discussed with reference to Fig. 7B, if the UE 102 operating in the connected state detects a failure while communicating with the CU 172 or the DU 174, the UE 102 can transmit an RRC reestablishment request message to the CU 172 via the DU 174. The RRC reestablishment request message includes a MAC-I that the UE 102 generates based on the third RNTI, and the CU 172 can therefore determine whether the RRC reestablishment request is valid by verifying the MAC-I using the third RNTI. If the CU 172 verifies the MAC-I, the CU 172 can send an RRC reestablishment message to the UE 102 via the DU 174 in response to the RRC reestablishment request message. Otherwise, the CU 172 can send an RRC setup message or an RRC reject message to the UE 102 in response to the RRC reestablishment request message.

At a later time, the CU 172 may determine to transition the UE 102 to an inactive state and configure resources for the UE 102 to utilize while operating in the inactive state. Accordingly, the CU 172 may initiate a configured resources configuration procedure 591, in which the DU 174 can assign another RNTI for the UE 102. The UE 102 can then perform 593 early data communication with the base station 104 using a configured resources configuration obtained during the configured resources configuration procedure 591. Similar to Fig. 3A, this process of configured resources configuration procedure followed by early data communication may continue with a configured resources configuration 595 following early data communication 593.

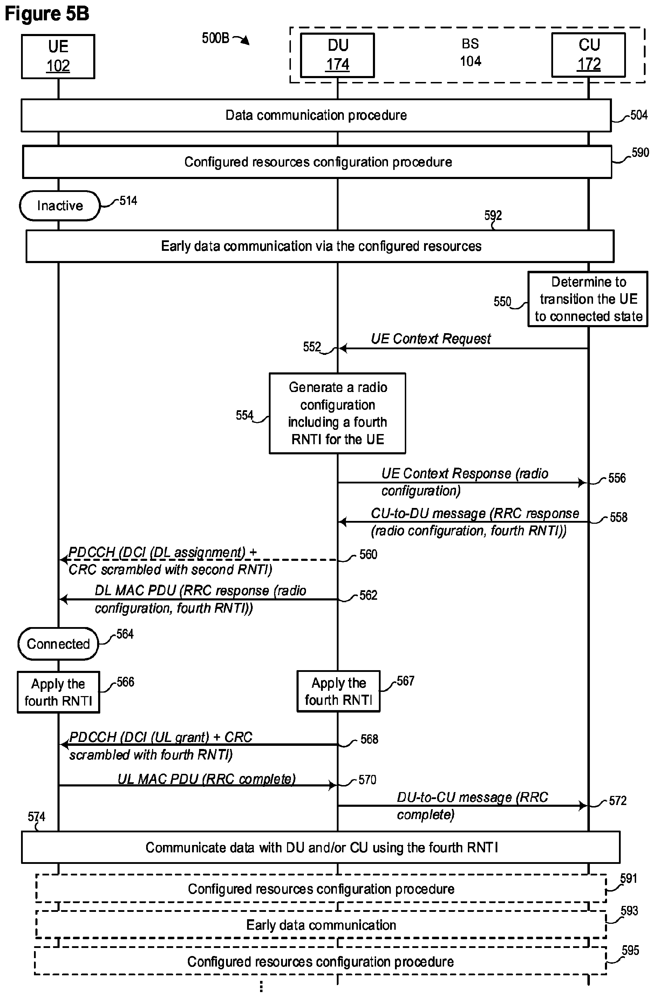

Fig. 5B illustrates a scenario 500B that is similar to the scenario 500A. However, after determining 550 to transition the UE 102 to the connected state, the CU 172 transmits 552 a UE Context Request message (e.g., a *UE Context Setup Request* message or a *UE Context Modification Request* message) to the DU 174. In response, the DU 174 generates a radio configuration including a fourth RNTI for the UE 102. The DU 174 transmits 556 a UE Context Response message (e.g., a *UE Context Setup Response* message or a *UE Context Modification Response* message) including the radio configuration to the CU 172. In some implementations, the DU 174 also includes the fourth RNTI as a field or IE of the UE Context Response message to inform the CU 172 of the fourth RNTI.

The remainder of the events of the scenario 500B are similar to the events of the scenario 500A, except that the fourth RNTI is utilized by the UE 102 and the base station 104 rather than the third RNTI. Thus, the scenario 500B is similar to the scenario 500A except that the CU 172 requests a new radio configuration and RNTI for the UE 102 rather than using the radio configuration and third RNTI that the CU 172 received during the event 592.

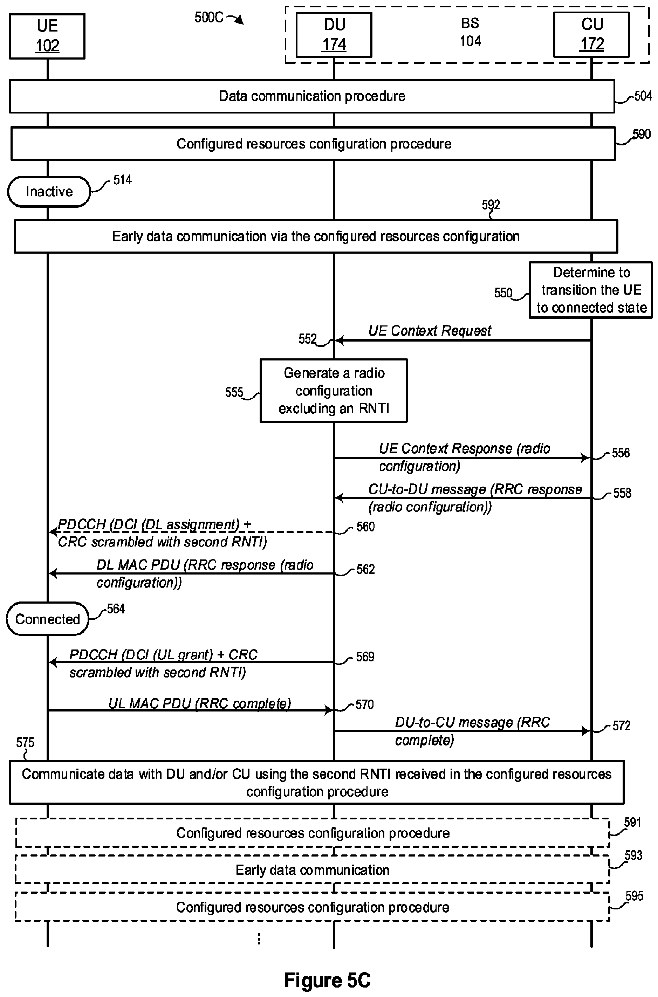

Fig. 5C illustrates a scenario 500C that is initially similar to the scenario 500B. However, after receiving 552 the UE Context Request message from the CU 172, the DU 174 generates a radio configuration that excludes an RNTI. The DU 174 sends 556 the radio configuration in a UE Context Response message to the CU 172. The CU 172 then transmits 558 an RRC response message including the radio configuration to the UE 102 via the DU 174. After receiving 562 the RRC response message and transitioning 564 to the connected state, the UE 102 utilizes the second RNTI (i.e., the RNTI that the UE 102 received during the configured resources configuration procedure 590) because the radio configuration does not include a new RNTI for the UE 102 to utilize. The DU 174 also continues to use the second RNTI. Accordingly, the DU 174 may send 569 a DCI and a CRC scrambled using the second RNTI to the UE 102, where the DCI indicates an UL grant for the UE to use to transmit 570 an RRC complete message. The UE 102 can then communicate 575 with the DU 174, and with the CU 172 via the DU 174, using the second RNTI.

If the UE 102 operating in the connected state detects a failure while communicating with the CU 172 or the DU 174, the UE 102 can transmit an RRC reestablishment request to the CU 172 via the DU 174. The RRC reestablishment request includes a MAC-I that the UE 102 generates based on the second RNTI. In this case, the CU 172 verifies the MAC-I based on the second RNTI. Alternatively, the RRC reestablishment request includes a MAC-I that the UE 102 generates based on the first RNTI. In this case, the CU 172 verifies whether the MAC-I is valid based on the first RNTI.

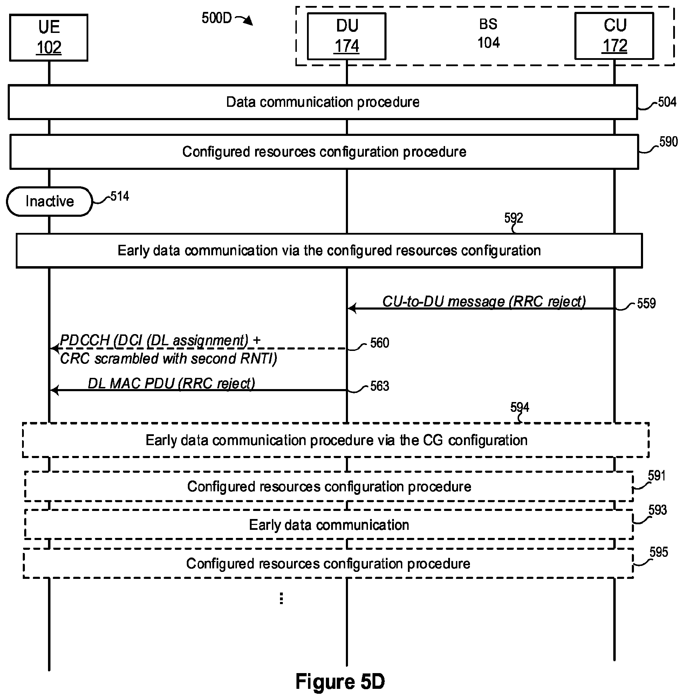

Turning to Fig. 5D, a scenario 500D is initially similar to the scenarios 500A-500C. However, after or during the early data communication 592, the CU 172 transmits 559 an RRC reject message to the DU 174, which in turn transmits 563 the RRC reject message to the UE 102. In some implementations, the CU 172 determines to send the RRC reject message to the UE 102 because the CU 172 or the DU 174 is congested. In such cases, the CU 172 can include a wait time in the RRC reject message. The UE 102 is not allowed to access the DU 174 (e.g., not allowed to perform subsequent early data communication or to perform an RRC resume or setup procedure with the CU 172 via the DU 174) before the wait time elapses. For example, the UE can perform 594 subsequent early data communication after the wait time elapses. To perform the early data communication, the UE 102 may use the configured resources configuration received during event 590.

Further, in response to receiving 563 the RRC reject message, the UE 102 may retain the first RNTI. The UE 102 can use the first RNTI, for example, to generate a MAC-I included in an UL RRC message during the subsequent early data communication 594. The UE 102 may also retain the second RNTI, which the UE 102 can use to descramble CRCs received from the DU 174 during the subsequent early data communication 594.

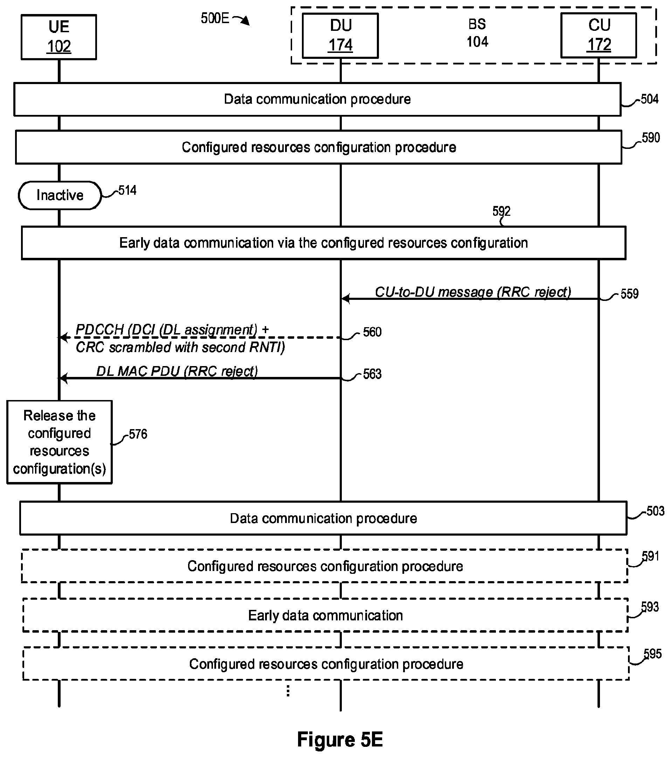

Turning to Fig. 5E, a scenario 500E is initially similar to the scenario 500D. However, in response to receiving 563 the RRC reject message, the UE 102 releases the configured resources configuration(s) that the UE 102 received during event 590. The UE 102 may retain the first and/or second RNTIs, as discussed above with reference to Fig. 5D. To reinitiate communications with the base station 104, the UE 102 can perform 503 a data communication procedure, which may be the random access procedure 403 or 405. During the data communication procedure 503, the UE 102 receives a new RNTI (e.g., similar to the first RNTI) with which the UE 102 can communicate with the DU 174 and the CU 172. The DU 174 can also assign another RNTI (e.g., similar to the second RNTI) to the UE 102 during a configured resources configuration procedure 591. Alternatively, the UE 102 may release or discard the second RNTI in response to receiving 563 the RRC reject message. The CU 172 can send a CU-to-DU message to the DU 174 to release the second RNTI and/or the configured resources configuration in response to the determination to send the RRC reject message.

In some implementations, the CU 172 can indicate whether the UE 102 retains or releases/discards the second RNTI in the RRC reject message. The UE 102 retains or releases/discards the second RNTI in accordance with the indication in the RRC reject message. For example, the CU 172 can include an indication in the RRC reject message to indicate the UE 102 to retain the second RNTI and the configured resources configuration. In response to the indication, the UE 102 retains the second RNTI and the configured resources configuration. If the RRC reject message does not include the indication, the UE 102 can release the second RNTI and the configured resources configuration. In another example, the CU 172 can include an indication in the RRC reject message to indicate the UE 102 to release the second RNTI and the configured resources configuration. In response to the indication, the UE 102 releases the second RNTI and the configured resources configuration. If the RRC reject message does not include the indication, the UE 102 retains the second RNTI and the configured resources configuration.

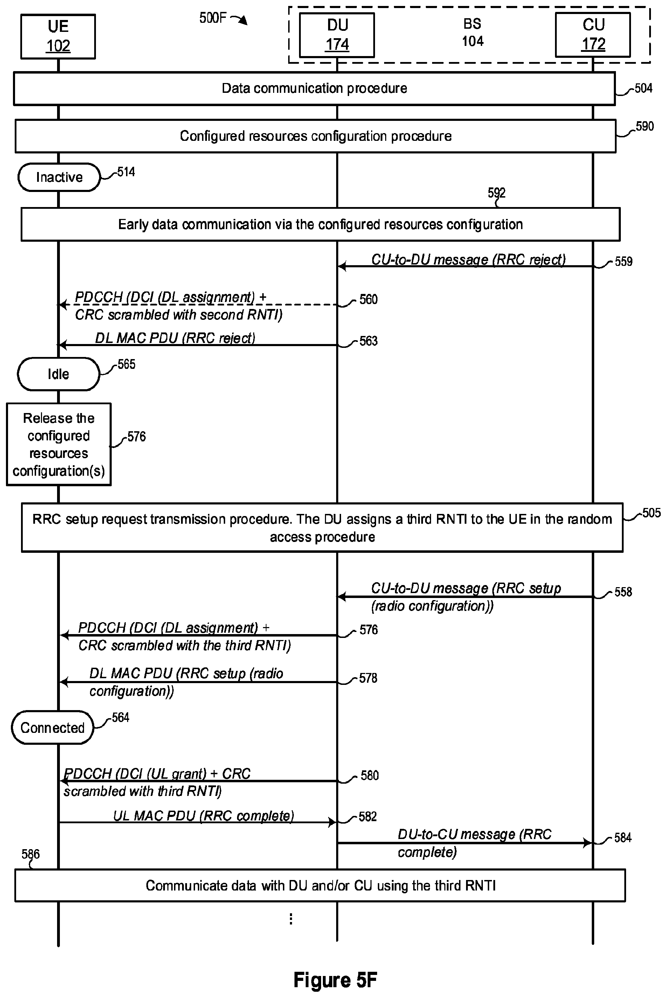

Turning to Fig. 5F, a scenario 500F is initially similar to the scenarios 500D and 500E. As mentioned previously, throughout the above description of Figs. 3A-5E, "inactive state" has been used to represent either RRC_INACTIVE or RRC_IDLE. In contrast, in Fig. 5F, references to the inactive state refer to RRC_INACTIVE, and references to the idle state refer to RRC_IDLE. After receiving 563 the RRC reject message from the CU 172 via the DU 174, the UE 102 transitions 565 from the inactive state to an idle state. Further, in response to the RRC reject message, the UE 102 releases the first RNTI and releases 576 the configured resources configuration(s) that the UE 102 received during event 590. The UE 102 also may release the second RNTI that the UE received during event 590.

As noted above with reference to Fig. 5D, in some implementations, the CU 172 transmits 559 the RRC reject message to the UE 102 because the CU 172 or the DU 174 is congested. In such cases, the CU 172 can include a wait time in the RRC reject message. The UE 102 can attempt to perform subsequent early data communication with the base station 104 after the wait time elapses. In other implementations, the CU 172 transmits 559 the RRC reject message to the UE 102 via the DU 174 because the CU 172 detects a failure or an error during the early data communication. In such cases, the UE 102 may be unable to perform subsequent early data communication, and may utilize the techniques illustrated in Fig. 5F.

After releasing 576 the configured resources configuration(s), the UE 102 initiates an RRC setup procedure. In particular, the UE 102 performs 505 an RRC setup request transmission procedure. The RRC setup request transmission procedure 505 may be similar to the random access procedure 403 or 405. Accordingly, the UL RRC message that the UE 102 transmits to the DU 174 during the random access procedure may be an RRC setup request message. During the random access procedure, the DU 174 assigns a third RNTI to the UE 102, similar to how the DU 174 assigns the first RNTI to the UE 102 during the random access procedures 403 and 405. The CU 172 then transmits an RRC setup message to the UE 102 via the DU 174. The RRC setup message includes a radio configuration for the UE 102 to communicate with the DU 174. The CU 172 may receive the radio configuration for the UE 102 from the DU 174 in the DU-to-CU message that the DU 174 transmits to the CU 172 during the RRC setup request transmission procedure 505. In such cases, the CU 172 may refrain from including a RNTI in the RRC setup message to replace the third RNTI.

Before transmitting 578 the RRC setup message to the UE 102, the DU 174 can transmit 576 a DCI and a CRC scrambled using the third RNTI to the UE 102, where the DCI indicates resources on which the UE 102 can receive the RRC setup message. In response to receiving the RRC setup message, the UE 102 transitions 564 to the connected state and transmits 582 an RRC complete message to the CU 172 via the DU 174. The DU 174 may indicate resources on which the UE 102 can transmit the RRC complete message by transmitting a DCI and a CRC scrambled using the third RNTI. The UE 102 can then communicate 586 with the DU 174 and/or the CU 172 using the third RNTI.

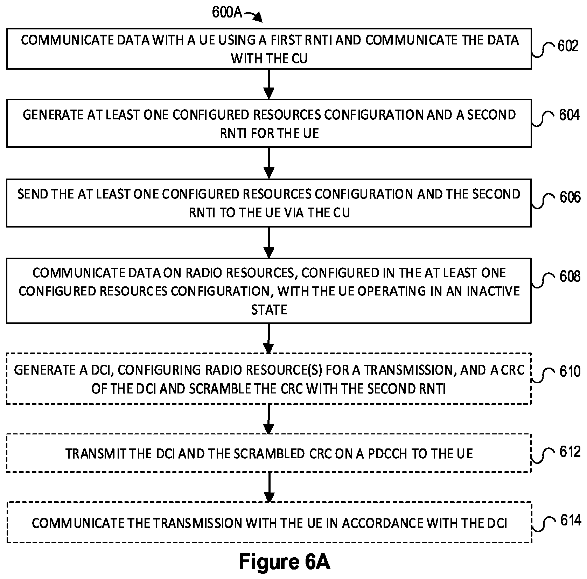

Figs. 6A-16 are flow diagrams depicting example methods that a network node of a RAN (e.g., a network node of the RAN 105, such as the DU 174, the CU 172, or the base station 104) or a UE (e.g., the UE 102) can implement to manage early data communication.

Turning first to Fig. 6A, a DU (e.g., the DU 174) can implement an example method 600A to communicate with a UE (e.g., the UE 102) while the UE operates in an inactive state. At block 602, the DU communicates data with the UE using a first RNTI, and communicates the data with a CU (e.g., the CU 172) (e.g., events 304, 403, 405). The first RNTI can be, for example, a C-RNTI or a CS-RNTI. The UE may be operating in the inactive state at block 602 (e.g., as in Figs. 4A-4B), or the UE may be operating in the connected state at block 602 (e.g., as in Figs. 3A-3B).

At block 604, the DU generates at least one configured resources configuration and a second RNTI for the UE. In some implementations, the at least one configured resources configuration includes CG configuration(s) for UL data transmission and/or includes SPS configuration(s) for DL data reception

In some implementations, the DU generates the at least one configured resources configuration specifically for the UE to use to communicate with the DU while the UE operates in the inactive state. If the UE later transitions to the connected state, the DU stops using the at least one configured resources configuration. In other implementations, the DU continues to use the at least one configured resources configuration when or after the UE transitions to the connected state.

At block 606, the DU sends the at least one configured resources configuration and the second RNTI to the UE via the CU (e.g., events 308A, 310A, 311A, 312A, 308B, 310B, 311B, 312B, 490, 590). For example, the DU sends a CU-to-DU message to the CU including the at least one configured resources configuration and the second RNTI, and the CU sends the at least one configured resources configuration and the second RNTI to the UE via the DU 174. The CU can transmit to the DU a DL RRC message including the at least one configured resources configuration and the second RNTI, and the DU can transmit the DL RRC message to the UE. In some implementations, the CU generates an additional RNTI (e.g., an inactive RNTI (I-RNTI)) or a resume identity and includes the additional RNTI or resume identity in the DL RRC message. The DL RRC message can be, for example, an RRC release message. If the UE operates in the connected state at block 602, the DL RRC message causes the UE to transition to the inactive state.

In some implementations, the DU includes the second RNTI in at least one of the at least one configured resources configuration. In other implementations, the DU generates a container IE including the at least one configured resources configuration and the second RNTI and sends the container IE to the UE via the CU. For example, the container IE can be *a CellGroupConfig* IE or an existing IE in a *CellGroupConfig* IE. In another example, the container IE can be a newly defined IE.

In some implementations, the DU can further include the second RNTI as an IE of the CU-to-DU message in addition to including the second RNTI in the at least one configured resources configuration or in the container IE. Thus, the CU can obtain the second RNTI from the IE of the CU-to-DU message without retrieving the second RNTI from the at least one configured resources configuration or the container IE. In other implementations, the DU does not include the second RNTI in or as an IE of the CU-to-DU message, and the CU retrieves the second RNTI from the at least one configured resources configuration or the container IE. In yet other implementations, the DU includes the at least one configured resources configuration and the second RNTI in a first IE and a second IE of the CU-to-DU message, respectively.

At block 608, while the UE operates in an inactive state, the DU communicates data with the UE on radio resources configured in the at least one configured resources configuration (e.g., events 316, 328, 339, 392A, 392B, 492, 592). At block 610, the DU generates a DCI configuring radio resource(s) for a transmission and generates a CRC of the DCI. The DU scrambles the CRC with the second RNTI. The transmission can be, for example, a retransmission of transmission that was scheduled by the configured resources configuration but failed, or can be a transmission of new data. At block 612, the DU transmits the DCI and the scrambled CRC on a PDCCH to the UE (e.g., events 318, 330, 336, 340). At block 614, the DU communicates the transmission with the UE in accordance with the DCI (e.g., events 320, 332, 338, 342).

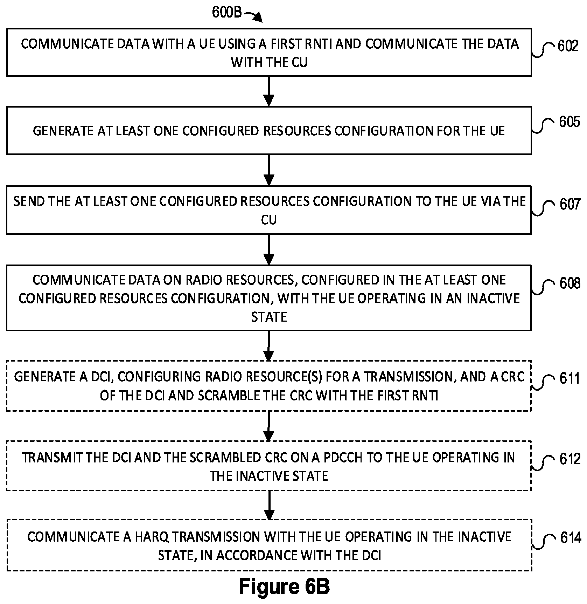

Turning to Fig. 6B, a DU (e.g., the DU 174) can implement an example method 600B to communicate with a UE (e.g., the UE 102) while the UE operates in an inactive state. The method 600B is similar to the method 600A, except that the DU does not generate a second RNTI. Instead, the DU utilizes the first RNTI throughout the method 600B. Blocks in Fig. 6B that are the same as blocks in Fig. 6A are labeled with the same reference numbers.

At block 605, the DU generates at least one configured resources configuration for the UE. The at least one configured resources configuration does not include an RNTI. The DU sends the at least one configured resources configuration to the UE via the CU, at block 607. When the DU later generates a DCI at block 611, the DU scrambles the DCI using the first RNTI rather than a second RNTI.

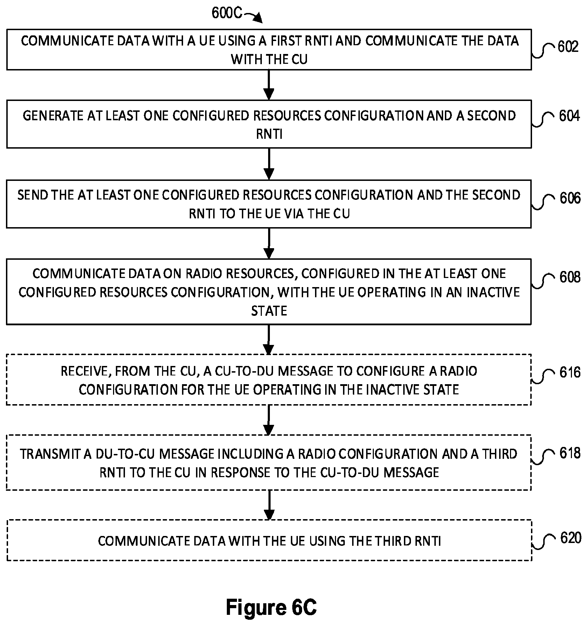

Turning to Fig. 6C, a DU (e.g., the DU 174) can implement an example method 600C to communicate with a UE (e.g., the UE 102) while the UE operates in an inactive state. The method 600C is similar to the method 600A, but includes different steps after block 608. Blocks in Fig. 6C that are the same as blocks in Fig. 6A are labeled with the same reference numbers.

At block 616, the DU receives, from the CU, a CU-to-DU message to configure a radio configuration for the UE operating in the inactive state (e.g., events 391A, 391B, 491, 552). In response, the DU at block 618 transmits a DU-to-CU message including a radio configuration and a third RNTI to the CU (e.g., events 391A, 391B, 491, 556). At block 620, the DU communicates data with the UE using the third RNTI (e.g., events 393A, 393B, 568, 574).

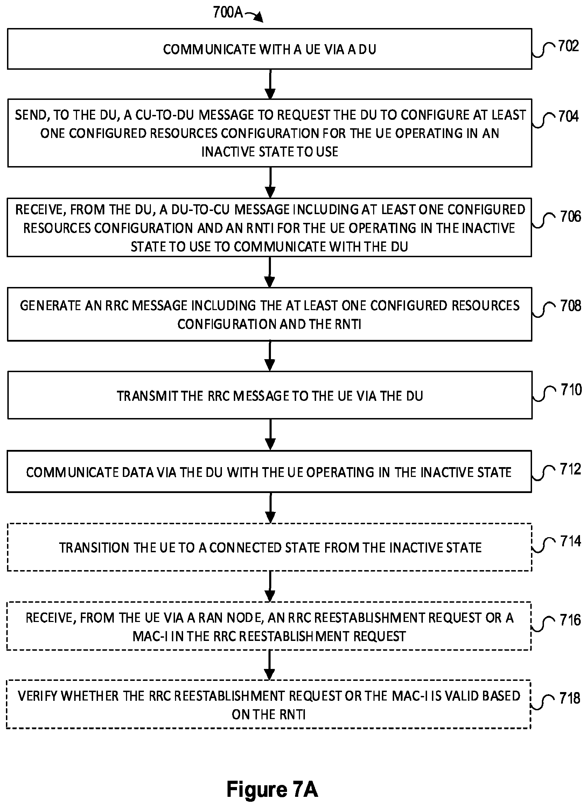

Turning next to Fig. 7A, a CU (e.g., the CU 172) can implement an example method 700A to communicate with a UE (e.g., the UE 102) while the UE operates in an inactive state. Initially, the CU communicates with the UE via a DU (e.g., the DU 174) at block 702 (e.g., events 304, 403, 405). The UE may be operating in the inactive state at block 702 (e.g., as in Figs. 4A-4B), or the UE may be operating in the connected state at block 702 (e.g., as in Figs. 4A-4B).

At block 704, the CU sends, to the DU, a CU-to-DU message requesting the DU to configure at least one configured resources configuration that the UE can use while operating in the inactive state (e.g., events 306, 490, 590). At block 706, the CU receives, from the DU, a DU-to-CU message including at least one configured resources configuration and an RNTI for the UE to use to communicate with the DU while operating in the inactive state (e.g., events 308A, 308B, 490, 590). At block 708, the CU generates an RRC message including the at least one configured resources configuration and the RNTI. The RRC message may be an RRC release message. The CU transmits the RRC message to the UE via the DU, at block 710 (e.g., events 310A, 310B, 490, 590). If the UE initially operates in the connected state at block 702, the RRC message causes the UE to transition to the inactive state. At block 712, the CU communicates data via the DU with the UE while the UE operates in the inactive state (e.g., 392A, 392B, 492, 592).

In some implementations, at block 714, the CU causes the UE to transition to a connected state from the inactive state (e.g., by transmitting an RRC response message to the UE via the DU, such as at event 558). At block 716, after the UE is operating in the connected state, the CU receives, from the UE via a RAN node, an RRC reestablishment request or a MAC-I in the RRC reestablishment request. The RAN node may be the DU, another DU, another CU, or another base station. At block 718, the CU verifies whether the RRC reestablishment request or the MAC-I is valid based on the RNTI.

Turning to Fig. 7B, a CU (e.g., the CU 172) can implement an example method 700B to communicate with a UE (e.g., the UE 102) while the UE operates in an inactive state. Blocks 702-712 are the same in Figs. 7A and 7B. At block 720, the CU determines to transition the UE to a connected state from the inactive state (e.g., event 550). At block 722, the CU sends, to the DU, a CU-to-DU message in response to the determination at block 720 (e.g., event 552). At block 724, the CU receives, from the DU, a DU-to-CU message including a radio configuration and a second RNTI (e.g., event 556). In some implementations, the DU sets the value of the second RNTI to the value of the RNTI the CU received at block 706. In other implementations, the DU sets the value of the second RNTI to a value different from the RNTI.

At block 726, the CU sends, to the UE via the DU, a message including the radio configuration and the second RNTI in order to transition the UE to the connected state from the inactive state (e.g., event 558). At a later time, the CU receives, from the UE via a RAN node, an RRC reestablishment request or a MAC-I in the RRC reestablishment request. At block 719, the CU verifies whether the RRC reestablishment request or the MAC-I is valid based on the second RNTI.

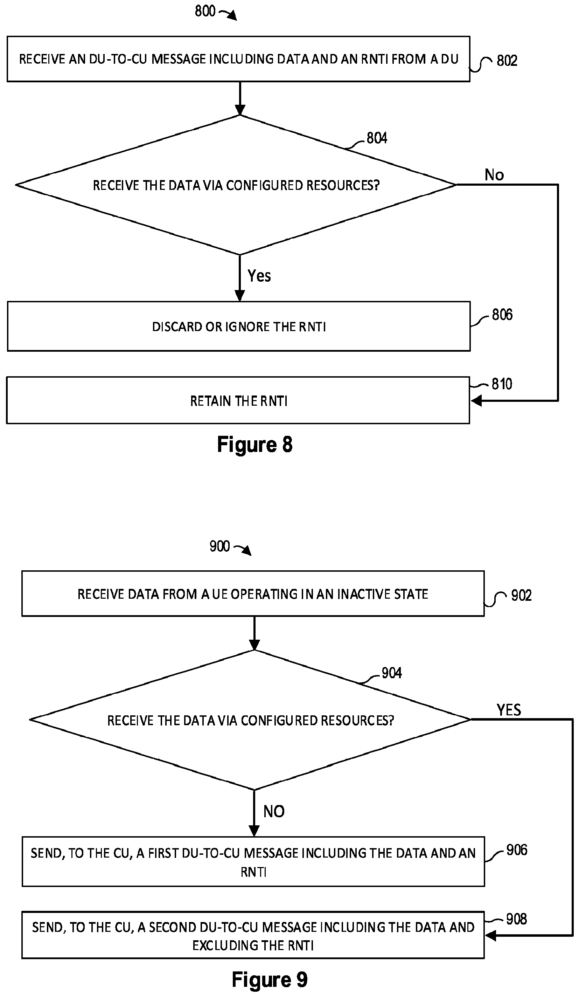

Fig. 8 is a flow diagram of an example method 800 for processing an RNTI, which can be implemented by a CU (e.g., the CU 172). At block 802, the CU receives a DU-to-CU message including data and an RNTI from a DU (e.g., the DU 174) (e.g., event 322). In some implementations, the DU-to-CU message is an *Initial UL RRC Message Transfer* message. The data may include at least one of an RRC PDU, PDCP PDU(s), and NAS PDU(s). For example, the RRC PDU can be a UL-CCCH-Message. The UL-CCCH-Message may include an RRC message (e.g., a *RRCResumeRequest, RRCResumeRequest1,* or *RRCEarlyDataRequest* message). In another example, the RRC PDU includes the RRC message. In yet another example, the PDCP PDU includes an SDAP PDU, an IP packet, a portion of an SDAP PDU, or a portion of an IP packet. In yet another example, the SDAP PDU can include an IP packet or a portion of an IP packet. In yet another example, the NAS PDU includes a NAS message, an IP packet, or a portion of an IP packet.

At block 804, the CU determines whether data was received via configured resources (e.g., whether the DU received the data from a UE via configured resources). If so, then the flow proceeds to block 806, where the CU discards or ignores the RNTI. Otherwise, the flow proceeds to block 810, where the CU retains the RNTI.

Fig. 9 is a flow diagram of an example method 900 for processing an RNTI, which can be implemented by a DU (e.g., the DU 174). At block 902, the DU receives data from a UE (e.g., the UE 102) operating in an inactive state. At block 904, the DU determines whether the DU received the data via configured resources. If not, then the flow proceeds to block 906, where the DU sends, to a CU (e.g., the CU 172), a first CU-to-DU message including the data and an RNTI. Otherwise, the flow proceeds to block 908, where the DU sends, to the CU, a second DU-to-CU message including the data and excluding the RNTI.

In some implementations, the data includes a UL RRC message and/or a PDCP PDU. The DU can include the UL RRC message in the first/second DU-to-CU message. Likewise, in some implementations, the DU can include the PDCP PDU in the first/second DU-to-CU message. In other implementations, the DU does not include the PDCP PDU in the first/second DU-to-CU message and sends the PDCP PDU separately on a DU-to-CU user plane interface (e.g., F1-U or W1-U).

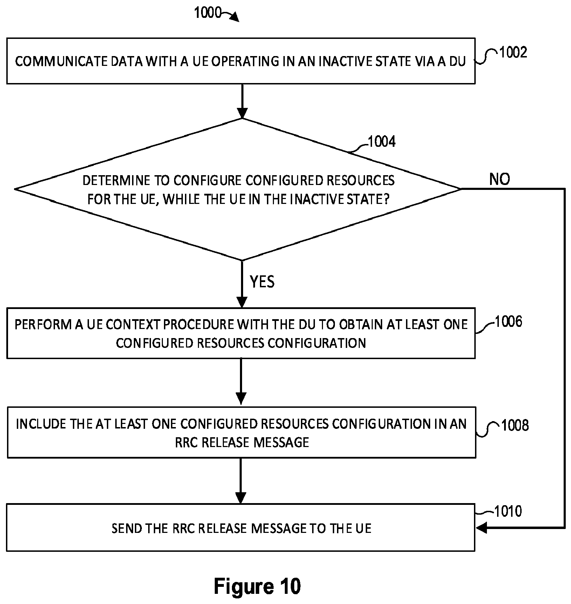

Fig. 10 is a flow diagram of an example method 1000 for configuring a UE (e.g., the UE 102) with configured resources while the UE operates in an inactive state, which can be implemented by a CU (e.g., the CU 172). At block 1002, the CU communicates data with a UE operating in an inactive state via a DU (e.g., the DU 174). At block 1004, the CU determines to configure configured resources (e.g., a CG configuration or an SPS configuration) for the UE to use while operating in the inactive state. If so, then the CU performs a UE Context procedure with the DU to obtain at least one configured resources configuration, at block 1006 (e.g., during events 391, 490, 491). In some implementations, the UE Context procedure is a UE Context Setup procedure. In other implementations, the UE Context procedure is a UE Context Modification procedure. At block 1008, the CU includes the at least one configured resources configuration in an RRC release message, which the CU sends to the UE via the DU at block 1010 (e.g., during events 391, 490, 491). If the CU determines at block 1004 not to configure configured resources for the UE, then the flow proceeds directly to block 1010 from block 1004.

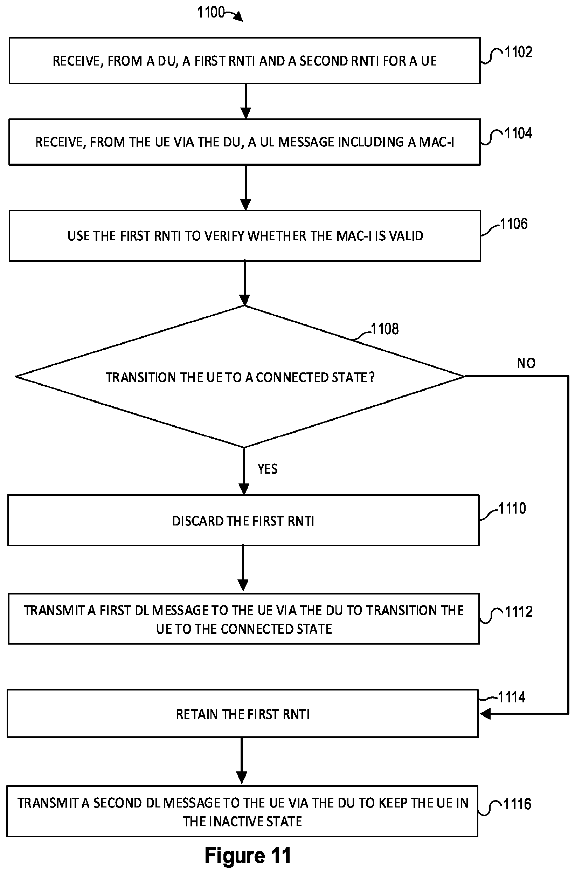

Fig. 11 is a flow diagram of an example method 1100 for processing an RNTI based on whether a UE (e.g., the UE 102) is transitioning to a connected state, which can be implemented by a CU (e.g., the CU 172). At block 1102, the CU receives, from a DU (e.g., the DU 174), a first RNTI and a second RNTI for a UE, where the UE is operating in an inactive state. For example, the first RNTI may be an RNTI that CU previously used to communicate with the UE while the UE operated in the connected state (e.g., the first RNTI from event 304), or an RNTI that the CU received from a DU during a random access procedure with the UE operating in the inactive state (e.g., the first RNTI from events 403, 405). The second RNTI may be an RNTI that the CU received with a configured resources configuration from a DU (e.g., the second RNTI from Figs. 3A-4B). At block 1104, the CU receives, from the UE via the DU, a UL message including a MAC-I. For example, the UL message can be an UL RRC message.

At block 1106, the CU uses the first RNTI to verify whether the MAC-I received at block 1104 is valid. At block 1108, the CU determines whether to transition the UE from the inactive state to a connected state. If the CU determines to transition the UE to the connected state, then the flow proceeds to block 1110. At block 1110, the CU discards the first RNTI (e.g., because the CU determines that the first RNTI will no longer be valid after the UE transitions to the connected state). At block 1112, the CU transmits a first DL message to the UE via the DU in order to transition the UE to the connected state. If the CU determines not to transition the UE to the connected state, then the flow proceeds to block 1114. At block 1114, the CU retains the first RNTI (e.g., because the CU determines that the first RNTI is still valid for the UE while the UE remains in the inactive state). At block 1116, the CU transmits a second DL message to the UE via the DU to keep the UE in the inactive state.

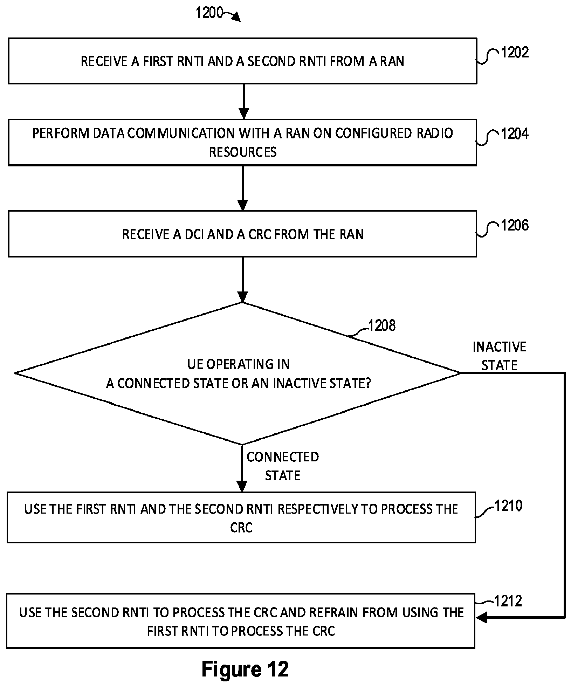

Fig. 12 is a flow diagram of an example method 1200 for processing a CRC received with a DCI, which can be implemented by a UE (e.g., the UE 102). At block 1202, the UE receives a first RNTI and a second RNTI from a RAN (e.g., the RAN 105). In some implementations, the first RNTI is a C-RNTI and the second RNTI is a CS-RNTI. In other implementations, the first and second RNTIs are different C-RNTIs. At block 1204, the UE performs data communication with a RAN on configured radio resources (i.e., in accordance with a configured resources configuration). At block 1206, the UE receives a DCI and a CRC from the RAN. At block 1208, the UE determines whether the UE is operating in a connected state or an inactive state. If the UE is operating in a connected state, then the UE uses the first and second RNTIs, respectively, to process the CRC, at block 1210. If the UE is operating in the inactive state, then the UE uses the second RNTI to process the CRC and refrains from using the first RNTI to process the CRC.

The UE in Fig. 12 processes the CRC to identify whether the DCI is addressed to the UE. In some implementations, the UE processes a CRC by using an RNTI to descramble the CRC. The UE also calculates a CRC from the DCI. If the calculated CRC is the same as the descrambled CRC, the UE determines that the DCI is addressed to the UE. In other implementations, the UE processes a CRC by using an RNTI to scramble a CRC calculated from the DCI. If the scrambled, calculated CRC is the same as the received CRC, the UE determines that the DCI is addressed to the UE.

Fig. 13 is a flow diagram of an example method 1300 for determining whether to include a reconfiguration with sync indication in a message instructing a UE (e.g., the UE 102) to transition to an inactive state, which can be implemented by a RAN node, such as a CU (e.g., the CU 172) or a base station (e.g., the base station 104). At block 1302, the RAN node performs early data communication with the UE while the UE operates in an inactive state. At block 1304, the RAN node determines to transition the UE from the inactive state to a connected state.

At block 1306, the RAN node determines whether synchronous reconfiguration is needed for the transition. In some implementations, the RAN node determines that synchronous reconfiguration is needed for the transition because the RAN node is reconfiguring the UE to use a second RNTI in the connected state instead of a first RNTI that the UE used during the early data communication while operating in the inactive state (e.g., as in the scenarios 500A and 500B in which the base station 104 configures the UE 102 to use a third RNTI or a fourth RNTI, respectively, instead of the second RNTI after transitioning to the connected state). In other implementations, the RAN node determines synchronous reconfiguration is needed for the transition because the RAN node is reconfiguring the UE to reestablish PDCP and/or RLC entity/entities for the transition. That is, the UE in the connected state uses the reestablished entity/entities to communicate with the RAN node. In yet other implementations, the RAN node determines synchronous reconfiguration is needed for the transition because the RAN node is reconfiguring the UE to derive new security key(s) for communication in the connected state.

If the RAN node determines that synchronous reconfiguration is needed for the transition, then the RAN node transmits, at block 1308, a DL RRC message including a reconfiguration with sync indication (e.g., a *ReconfigurationWithSync* IE) to the UE to transition the UE to the connected state. Otherwise, the RAN node transmits, at block 1314, a DL RRC message excluding a reconfiguration with sync indication to the UE to transition the UE to the connected state.

If the RAN node is a CU, the CU can obtain the reconfiguration with sync indication from a DU. For example, the CU can send a CU-to-DU message to the DU to obtain a reconfiguration with sync indication. In response, the DU sends a DU-to-CU message to the CU including the reconfiguration with sync indication. In another example, in response to the determination at block 1304, the CU can send a CU-to-DU message to the DU to obtain a *CellGroupConfig* IE. If the CU determines at 1306 that synchronous reconfiguration is needed, then the CU can include in the CU-to-DU message an indication that the DU is to provide a reconfiguration with sync indication in the *CellGroupConfig* IE. In response, the DU includes a reconfiguration with sync indication in the *CellGroupConfig* IE and sends a DU-to-CU message to the CU including the *CellGroupConfig* IE.

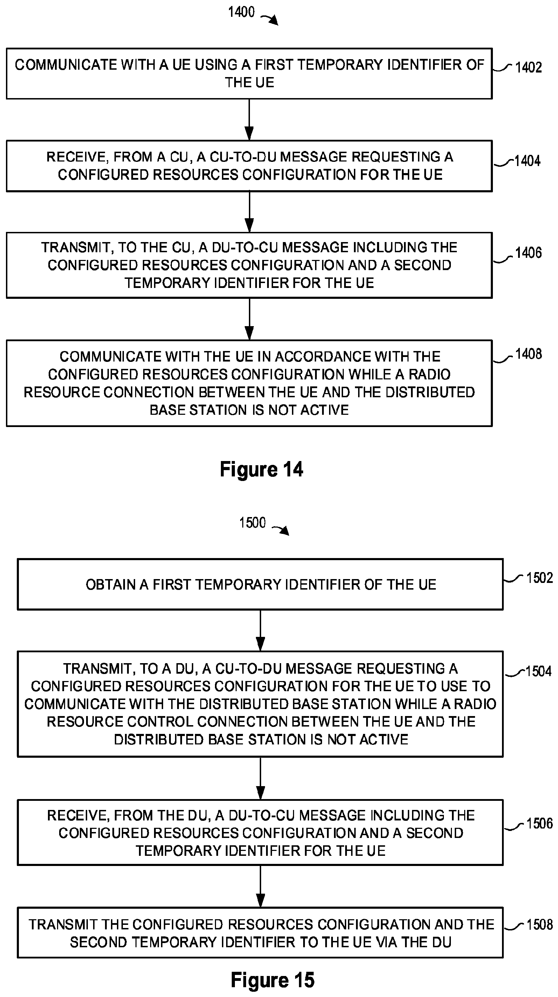

Fig. 14 is a flow diagram of an example method 1400 for managing early data communication with a UE (e.g., the UE 102), which can be performed by a DU (e.g., the DU 174) of a distributed base station. At block 1402, the DU communicates with the UE using a first temporary identifier (e.g., a first RNTI) of the UE (e.g., events 304, 403, 405, 504). At block 1404, the DU receives, from a CU (e.g., the CU 172) of the distributed base station, a CU-to-DU message requesting a configured resources configuration for the UE (e.g., events 306, 490, 590). The configured resources configuration may include a CG configuration for the UE to transmit uplink transmissions to the distributed base station and/or an SPS configuration for the UE to receive downlink transmissions from the distributed base station. At block 1406, the DU transmits, to the CU, a DU-to-CU message including the configured resources configuration and a second temporary identifier (e.g., a second RNTI) for the UE (e.g., events 308A, 308B, 490, 590). The second RNTI may be a PUR-RNTI or a CS-RNTI, for example. At block 1408, the DU communicates with the UE in accordance with the configured resources configuration while a radio resource control connection between the UE and the distributed base station is not active (e.g., while the UE operates in an inactive or an idle state, such as RRC_INACTIVE or RRC_IDLE) (e.g., events 392A, 392B, 492, 592).

In some implementations, the second temporary identifier is included in the DU-to-CU message as an IE defined by a protocol to which signaling between the CU and the DU conforms (e.g., an F1 or W1 application protocol). Alternatively or in addition, the second temporary identifier may be included in the configured resources configuration. As one example, a first instance of the second temporary identifier may be included in the configured resources configuration and a second instance of the second temporary identifier may be included as in IE of the DU-to-CU message.

In some implementations, the method 1400 may further include: generating a DCI indicating resources on which the UE is to transmit an uplink transmission to the UE (or resources on which the UE is to receive a downlink transmission from the DU) while the radio resource control connection is not active, scrambling a CRC value (also referred to herein as a CRC) for the DCI using the second temporary identifier, and transmitting the DCI and the CRC value to the UE while the radio resource control connection is not active (e.g., events 318, 330). The DU may transmit the DCI in response to failing to receive a scheduled transmission from the UE in accordance with the configured resources configuration, where the DCI schedules a retransmission of the scheduled transmission.

The CU-to-DU message is a first CU-to-DU message, and the method 1400 further includes: receiving, from the CU, a second CU-to-DU message including a message including the configured resources configuration and the second temporary identifier (e.g., events 310A, 310B); extracting the message from the second CU-to-DU message; and transmitting the message to the UE (e.g., events 311A, 312A, 311B, 312B). The message may be formatted in accordance with a protocol for controlling radio resources (e.g., the message may be an RRC message), and may instruct the UE to transition from a connected state to one of an inactive state or an idle state (e.g., an RRC release message).

In some implementations, communicating with the UE using the first temporary identifier includes communicating with the UE using the first temporary identifier while the UE operates in the connected state (e.g., event 304). In other implementations, the DU may assign the first temporary identifier to the UE while a radio resource control connection with the UE is not active. In such implementations, the DU-to-CU message is a second DU-to-CU message, and communicating with the UE using the first temporary identifier includes, prior to receiving the CU-to-DU message, performing a random access procedure with the UE while the radio resource control connection is not active and without transitioning the UE to a connected state (e.g., event 403, 405). Performing the random access procedure includes assigning the first temporary identifier to the UE (e.g., events 446, 447) and receiving, from the UE, a message formatted in accordance with a protocol for controlling radio resources (e.g., event 416). Performing the random access procedure may include performing a four-step random access procedure (e.g., event 403), or a two-step random access procedure (e.g., event 405).

In some implementations, the DU-to-CU message is a first DU-to-CU message, and the method 1400 further includes: transmitting, to the CU, a second DU-to-CU message including a configuration and a third temporary identifier for the UE (e.g., event 322, event 592, 556), and communicating with the UE using the third temporary identifier while the UE operates in a connected state (e.g., event 574). In such implementations, the CU-to-DU message may be a first CU-to-DU message, and the method may further include receiving, from the CU, a second CU-to-DU message requesting the configuration for the UE to use to communicate with the distributed base station (e.g., event 552), where the DU transmits the second DU-to-CU message to the CU in response to the second CU-to-DU message. In addition, in such implementations, the method 1400 may further include receiving, from the CU, a command for the UE to transition to the connected state, the command including the configuration and the third temporary identifier, and transmitting the command to the UE (e.g., events 558, 560), where the DU communicates with the UE using the third temporary identifier subsequently to transmitting the command.

In some implementations, the CU-to-DU message is a first CU-to-DU message, the DU-to-CU message is a first DU-to-CU message, and the method 1400 further includes: receiving, from the CU, a second CU-to-DU message requesting a configuration for the UE to use to communicate with the distributed base station (e.g., event 552), transmitting, to the CU, a second DU-to-CU message including the configuration (e.g., event 556 in Fig. 5C), and communicating with the UE using the second temporary identifier while the UE operates in a connected state (e.g., event 575).

Fig. 15 is a flow diagram of an example method 1500 for managing early data communication with a UE (e.g., the UE 102), which can be performed by a CU (e.g., the CU 172) of a distributed base station. At block 1502, the CU obtains a first temporary identifier of the UE (e.g., events 304, 422, 504). At block 1504, the CU transmits, to a DU (e.g., the DU 174) of the distributed base station, a CU-to-DU message requesting a configured resources configuration for the UE to use to communicate with the distributed base station while a radio resource control connection between the UE and the distributed base station is not active (e.g., events 306, 490, 590). At block 1506, the CU receives, from the DU, a DU-to-CU message including the configured resources configuration and a second temporary identifier for the UE (e.g., events 308A, 308B, 490, 590). At block 1508, the CU transmits the configured resources configuration and the second temporary identifier to the UE via the DU (e.g., events 310A, 310B, 490, 590). For example, the CU may include the configured resources configuration and the second temporary identifier in a message formatted in accordance with a protocol for controlling radio resources, and transmit the message to the UE via the DU. The message may instruct the UE to transition from a connected state to an inactive or an idle state.

In some implementations, the CU may, prior to transmitting the CU-to-DU message, communicate with the UE using the first temporary identifier while the UE operates in a connected state (e.g., event 304). While the radio resource control connection with the UE is not active, the CU may receive, from the UE via the DU, an uplink message, such as an UL RRC message, including an authentication code (e.g., a MAC-I) (e.g., event 322). The CU may verify the authentication code using the first temporary identifier. In some implementations, at a later time, the CU may transmit a message rejecting the radio resource control connection (e.g., an RRC reject message) (e.g., event 559). After transmitting the message, the CU may receive, from the UE via the DU, a second uplink message including a second authentication code, and the CU may verify the second authentication code using the first temporary identifier.

In other implementations, the CU may obtain the first temporary identifier from the DU while the UE operates in the inactive state. The DU-to-CU message may be a second DU-to-CU message, and obtaining the first temporary identifier may include: prior to transmitting the CU-to-DU message, receiving a first DU-to-CU message including a message formatted in accordance with a protocol for controlling radio resources and the first temporary identifier (e.g., event 422). In such implementations, the CU may transmit the CU-to-DU message in response to receiving the first DU-to-CU message.

In some implementations, the CU may receive, from the UE via the DU, an uplink message including an authentication code (e.g., event 322). The CU may use the second temporary identifier to verify the authentication code.

In some implementations, the CU may determine to transition the UE to a connected state. In such implementations, the CU may determine to discard the first temporary identifier (e.g., block 1110). Further, in such implementations, the CU may receive a second DU-to-CU message including a configuration and a third temporary identifier for the UE (e.g., event 322, 592, 556). The CU can transmit, to the DU, a command for the UE to transition to the connected state, the command including the configuration and the third temporary identifier (e.g., event 558). The CU can then communicate with the UE via the DU using the third temporary identifier while the UE operates in the connected state (e.g., event 574).

In some implementations, the CU communicates with the UE via the DU while the radio resource control connection is not active, and transmits, to the UE via the DU, a command instructing the UE to transition to a connected state (e.g., event 558). At a later time, the CU may receive, from the UE via the DU, a request to reestablish the radio resource control connection (e.g., an RRC reestablishment request message) including an authentication code. The CU may use the second temporary identifier to verify the authentication code, or may use a temporary identifier that the CU sends to the UE when transitioning the UE to the connected state, depending on the implementation. In such implementations, if the CU receives, from the UE via the DU, a request to reestablish the radio resource control connection including an authentication code, the CU may verify the authentication code using the third temporary identifier. Further, the CU may include in the command an indication that the UE is to perform a reconfiguration with sync (e.g., a reconfiguration with sync indication, such as a *ReconfigurationWithSync* IE).

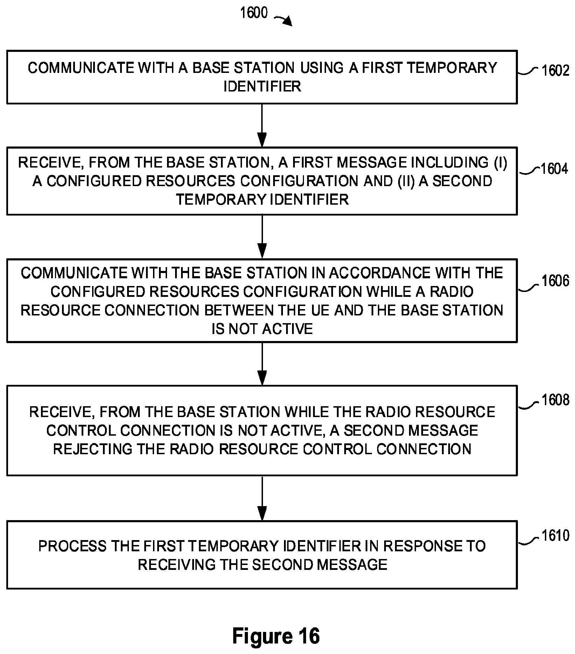

Fig. 16 is a flow diagram of a complementary method 1600 for managing communications with a base station (e.g., the base station 104), which can be performed by a UE (e.g., the UE 102). At block 1602, the UE communicates with the base station using a first temporary identifier (e.g., event 504). At block 1604, the UE receives, from the base station, a first message including (i) a configured resources configuration and (ii) a second temporary identifier (e.g., event 590). At block 1606, the UE communicates with the base station in accordance with the configured resources configuration while a radio connection between the UE and the base station is not active (e.g., event 592). At block 1608, the UE receives, from the base station while the radio resource control connection is not active, a second message rejecting the radio resource control connection (e.g., event 563). At block 1610, the UE processes the first temporary identifier in response to receiving the second message. In some implementations, the radio connection can be a RRC connection.

In some implementations, processing the first temporary identifier includes retaining the first temporary identifier (e.g., scenarios 500D-500E). In such implementations, the UE may utilize the retained first temporary identifier to communicate with the base station in accordance with the configured resources configuration (e.g., event 594). Alternatively, the UE may release the configured resources configuration (e.g., event 576).

In other implementations, processing the first temporary identifier includes releasing the first temporary identifier (e.g., scenario 500F). In such implementations, the UE may operate in an inactive state (e.g., RRC_INACTIVE) while the radio resource control connection is not active, and, in response to receiving the second message: transition to an idle state (e.g., RRC_IDLE) (e.g., event 565), and release the configured resources configuration (e.g., event 576). At a later time, the UE may transmit, to the base station, a request to set up a radio resources control connection with the base station (e.g., an RRC setup request message) (e.g., event 505). In response, the UE may receive a third temporary identifier from the base station. The UE may then transition to a connected state (e.g., event 564) and communicate with the base station using the third temporary identifier (e.g., event 586).

The following description may be applied to the description above.

In some implementations, "message" is used and can be replaced by "information element (IE)". In some implementations, "IE" is used and can be replaced by "field". In some implementations, "configuration" can be replaced by "configurations" or the configuration parameters.

A user device in which the techniques of this disclosure can be implemented (e.g., the UE 102) can be any suitable device capable of wireless communications such as a smartphone, a tablet computer, a laptop computer, a mobile gaming console, a point-of-sale (POS) terminal, a health monitoring device, a drone, a camera, a media-streaming dongle or another personal media device, a wearable device such as a smartwatch, a wireless hotspot, a femtocell, or a broadband router. Further, the user device in some cases may be embedded in an electronic system such as the head unit of a vehicle or an advanced driver assistance system (ADAS). Still further, the user device can operate as an internet-of-things (IoT) device or a mobile-internet device (MID). Depending on the type, the user device can include one or more general-purpose processors, a computer-readable memory, a user interface, one or more network interfaces, one or more sensors, etc.

Certain embodiments are described in this disclosure as including logic or a number of components or modules. Modules may can be software modules (e.g., code, or machine-readable instructions stored on non-transitory machine-readable medium) or hardware modules. A hardware module is a tangible unit capable of performing certain operations and may be configured or arranged in a certain manner. A hardware module can comprise dedicated circuitry or logic that is permanently configured (e.g., as a special-purpose processor, such as a field programmable gate array (FPGA) or an application-specific integrated circuit (ASIC), a digital signal processor (DSP), etc.) to perform certain operations. A hardware module may also comprise programmable logic or circuitry (e.g., as encompassed within a general-purpose processor or other programmable processor) that is temporarily configured by software to perform certain operations. The decision to implement a hardware module in dedicated and permanently configured circuitry, or in temporarily configured circuitry (e.g., configured by software) may be driven by cost and time considerations.

When implemented in software, the techniques can be provided as part of the operating system, a library used by multiple applications, a particular software application, etc. The software can be executed by one or more general-purpose processors or one or more special-purpose processors.

## Claims

1. A method in a distributed unit, DU, of a distributed base station, the distributed base station including the DU and a central unit, CU, for managing early data communication with a user equipment, UE, the method comprising:
communicating (1402; 304; 403; 405; 504), by the DU (174), with the UE (102) using a temporary identifier of the UE; **characterized by** further comprising
receiving (1404; 306; 490; 590), from the CU (172), a first CU-to-DU message requesting a configured resources configuration for the UE;
transmitting (1406; 308A; 308B; 490: 590), to the CU (172), a DU-to-CU message including the configured resources configuration for the UE (102);
receiving (310A; 310B, from the CU (172), a second CU-to-DU message including a message including the configured resources configuration and a configured scheduling RNTI, CS-RNTI, indicating to release a radio resource control connection;
extracting the message from the second CU-to-DU message; and
transmitting (311A; 311B; 312A; 312B) the message to the UE (102);
communicating (1408; 392A, 392B; 492; 592) with the UE (102) in accordance with the configured resources configuration while the radio resource control connection between the UE (102) and the distributed base station is not active.

2. The method of claim 1, wherein the CS-RNTI is included in the DU-to-CU message in at least one of:
an information element defined by a protocol to which signaling between the CU (172) and the DU (174)conforms; or
the configured resources configuration.

3. The method of any one of the preceding claims, further comprising:
generating a downlink control information, DCI, indicating resources on which the UE (102) is to transmit an uplink transmission to the DU (174) while the radio resource control connection is not active;
scrambling a cyclic redundancy check, CRC, value for the DCI using the second temporary identifier; and
transmitting (318; 330 the DCI and the CRC value to the UE (102) while the radio resource control connection is not active.

4. The method of claim 3, wherein:
the DU (174) transmits the DCI in response to failing to receive a scheduled transmission from the UE (102) in accordance with the configured resources configuration; and
the DCI schedules a retransmission of the scheduled transmission.

5. The method of claim 1 or 2, further comprising:
generating a DCI indicating resources on which the UE is to receive a downlink transmission from the DU (174) while the radio resource control connection is not active;
scrambling a CRC value for the DCI using the second temporary identifier; and
transmitting (318; 330) the DCI and the CRC value to the UE (102) while the radio resource control connection is not active.

6. The method of claim 1 or 2, further comprising:
generating a downlink control information, DCI, indicating resources on which the UE (102) is to transmit an uplink transmission to the DU (174) while the radio resource control connection is not active;
scrambling a cyclic redundancy check, CRC, value for the DCI using the first temporary identifier; and
transmitting the DCI and the CRC value to the UE (102) while the radio resource control connection is not active.

7. The method of any of the preceding claims, further comprising:
transmitting, to the CU, the CS-RNTI in the DU-to-CU message.

8. A method in a central unit, CU, of a distributed base station, the distributed base station including the CU and a distributed unit, DU, for managing early data communication with a user equipment (UE), the method comprising:
obtaining (1502; 304; 422; 504), by the CU (172), a first temporary identifier of the UE;
transmitting (1504; 306; 490; 590), to the DU (174), a first CU-to-DU message requesting a configured resources configuration for the UE (102) to use to communicate with the distributed base station while a radio resource control connection between the UE (102) and the distributed base station is not active;
receiving (1506; 308A; 308B; 490; 590), from the DU (174), a DU-to-CU message including the configured resources configuration for the UE (102);
generating a message including the configured resources configuration and a CS-RNTI and indicating to release the radio resource control connection; and
transmitting (1508; 310A; 310B; 490; 590) the message to the UE (102) via the DU (174) by transmitting, to the DU (174), a second CU-to-DU message including the message.

9. The method of claim 8, wherein the CS-RNTI identifier is included in the DU-to-CU message as an information element defined by a protocol to which signaling between the CU (172) and the DU (174) conforms.

10. The method of any one of the preceding claims, wherein the configured resources configuration includes a configured grant configuration for the UE (102) to transmit uplink transmissions to the distributed base station.

11. The method of any one of the preceding claims, wherein the message is a radio resource control (RRC) Release message.

12. The method of any one of the preceding claims, wherein:
transmitting, to the UE (102), the message includes transmitting the message to the UE (102) operating in a connected state; and
the message instructs the UE (102) to transition from the connected state to one of an inactive state or an idle state.

13. The method of any one of claims 1-12, wherein:
transmitting, to the UE (102), the message includes transmitting the message to the UE (102) operating in an idle or an inactive state without transitioning the UE (102) to a connected state.

14. The method of any of claims 8-13, further comprising:
receiving the CS-RNTI from the DU in the DU-to-CU message.

15. A network node of a distributed base station including processing hardware and configured to implement a method according to any one of the preceding claims.

## Patentansprüche

1. Verfahren in einer verteilten Einheit (distributed unit, DU) einer verteilten Basisstation, wobei die verteilte Basisstation die DU und eine Zentraleinheit (central unit, CU) zum Verwalten früher Datenkommunikation mit einem Endgerät (user equipment, UE) beinhaltet, wobei das Verfahren Folgendes umfasst:
Kommunizieren (1402; 304; 403; 405; 504), mit der DU (102) unter Verwendung eines temporären Bezeichners des UE durch die DU (174); **gekennzeichnet durch** ferner Umfassen von
Empfangen (1404; 306; 490; 590) einer ersten CU-zu-DU-Nachricht, die eine dazu konfigurierte Ressourcenkonfiguration für das UE anfordert, von der CU (172);
Übertragen (1406; 308A; 308B; 490; 590) einer DU-zu-CU-Nachricht, die die dazu konfigurierte Ressourcenkonfiguration für das UE (102) beinhaltet, an die CU (172);
Empfangen (310A; 310B) einer zweiten CU-zu-DU-Nachricht, die eine Nachricht beinhaltet, die die konfigurierte Ressourcenkonfiguration und einen konfigurierten Planungs-RNTI, CS-RNTI, beinhaltet und Freigeben einer Funkressourcensteuerungsverbindung angibt, von der CU (172);
Extrahieren der Nachricht aus der zweiten CU-zu-DU-Nachricht; und Übertragen (311 A; 311B; 312A; 312B) der Nachricht an das UE (102); Kommunizieren (1408; 392A, 392B; 492; 592) mit dem UE (102) gemäß der konfigurierten Ressourcenkonfiguration, während die Funkressourcensteuerungsverbindung zwischen dem UE (102) und der verteilten Basisstation nicht aktiv ist.

2. Verfahren nach Anspruch 1, wobei der CS-RNTI in der DU-zu-CU-Nachricht in mindestens einem von Folgendem beinhaltet ist:
einem Informationselement, das durch ein Protokoll definiert ist, dem Signalisieren zwischen der CU (172) und der DU (174) entspricht; oder
der konfigurierten Ressourcenkonfiguration.

3. Verfahren nach einem der vorhergehenden Ansprüche, ferner umfassend:
Erzeugen einer Downlink-Steuerungsinformation (downlink control information, DCI), die die Ressourcen angibt, auf denen das UE (102) eine Uplink-Übertragung an das DU (174) übertragen soll, während die Funkressourcensteuerungsverbindung nicht aktiv ist; Verschlüsseln eines zyklischen Redundanzprüfungswerts (cyclic redundancy check, CRC) für den DCI unter Verwendung des zweiten temporären Bezeichners; und
Übertragen (318; 330) des DCI- und des CRC-Werts an das UE (102), während die Funkressourcensteuerungsverbindung nicht aktiv ist.

4. Verfahren nach Anspruch 3, wobei:
die DU (174) den DCI als Reaktion auf das fehlerhafte Empfangen einer geplanten Übertragung von dem UE (102) gemäß der konfigurierten Ressourcenkonfiguration überträgt; und
der DCI eine Wiederübertragung der geplanten Übertragung plant.

5. Verfahren nach Anspruch 1 oder 2, ferner umfassend:
Erzeugen einer DCI, die die Ressourcen angibt, auf denen das UE eine Downlink-Übertragung an das DU (174) empfangen soll, während die Funkressourcensteuerungsverbindung nicht aktiv ist;
Verschlüsseln eines zyklischen CRC-Werts für den DCI unter Verwendung des zweiten temporären Bezeichners; und
Übertragen (318; 330) des DCI- und des CRC-Werts an das UE (102), während die Funkressourcensteuerungsverbindung nicht aktiv ist.

6. Verfahren nach Anspruch 1 oder 2, ferner umfassend:
Erzeugen einer Downlink-Steuerungsinformation, DCI, die die Ressourcen angibt, auf denen das UE (102) eine Uplink-Übertragung an das DU (174) übertragen soll, während die Funkressourcensteuerungsverbindung nicht aktiv ist;
Verschlüsseln eines zyklischen Redundanzprüfungswerts, CRC, für den DCI unter Verwendung des ersten temporären Bezeichners; und Übertragen des DCI- und des CRC-Werts an das UE (102), während die Funkressourcensteuerungsverbindung nicht aktiv ist.

7. Verfahren nach einem der vorhergehenden Ansprüche, ferner umfassend:
Übertragen des CS-RNTI in der DU-zu-CU-Nachricht an die CU.

8. Verfahren in einer Zentraleinheit (CU) einer verteilten Basisstation, wobei die verteilte Basisstation die CU und eine verteilte Einheit (DU) zum Verwalten früher Datenkommunikation mit einem Endgerät (UE) beinhaltet, wobei das Verfahren Folgendes umfasst:
Erlangen (15 02; 3 04; 422; 504) eines ersten temporären Bezeichners des UE durch die CU (172);
Übertragen (1504; 306; 490; 590) einer ersten CU-zu-DU-Nachricht, die eine konfigurierte Ressourcenkonfiguration für das UE (102) anfordert, an die DU (174), um mit der verteilten Basisstation zu kommunizieren, während eine Funkressourcensteuerungsverbindung zwischen dem UE (102) und der verteilten Basisstation nicht aktiv ist;
Empfangen (1506; 308A; 308B; 490; 590) einer DU-zu-CU-Nachricht, die die dazu konfigurierte Ressourcenkonfiguration für das UE (102) beinhaltet, von der DU (174);
Erzeugen einer Nachricht, die die dazu konfigurierte Ressourcenkonfiguration und einen CS-RNTI beinhaltet und das Freigeben der Funkressourcensteuerungsverbindung angibt; und
Übertragen (1508; 310A; 310B; 490; 590) der Nachricht an das UE (102) über die DU (174) durch das Übertragen einer zweiten CU-zu-DU-Nachricht an die DU (174), die die Nachricht beinhaltet.

9. Verfahren nach Anspruch 8, wobei der CS-RNTI-Bezeichner in der DU-zu-CU-Nachricht als eine Information beinhaltet ist, die durch ein Protokoll definiert ist, dem das Signalisieren zwischen der CU (172) und der DU (174) entspricht.

10. Verfahren nach einem der vorhergehenden Ansprüche, wobei die konfigurierte Ressourcenkonfiguration eine konfigurierte Berechtigungskonfiguration für das UE (102) beinhaltet, um Uplink-Übertragungen an die verteilte Basisstation zu übertragen.

11. Verfahren nach einem der vorhergehenden Ansprüche, wobei die Nachricht eine Funkressourcensteuerung- (radio resource control, RRC-)Freigabenachricht ist.

12. Verfahren nach einem der vorhergehenden Ansprüche, wobei:
das Übertragen der Nachricht an die UE (102) das Übertragen der Nachricht an das UE (102), das in einem verbundenen Zustand arbeitet, beinhaltet; und
die Nachricht das UE (102) anweist, von dem verbundenen Zustand in einen inaktiven Zustand oder einen Ruhezustand überzugehen.

13. Verfahren nach einem der Ansprüche 1-12,: wobei:
das Übertragen der Nachricht an das UE (102) das Übertragen der Nachricht an das UE (102), das im Ruhezustand oder inaktiv arbeitet, ohne das UE (102) in einen verbundenen Zustand zu versetzen, beinhaltet.

14. Verfahren nach einem der Ansprüche 8-13, ferner umfassend:
Empfangen des CS-RNTI von der DU in der DU-zu-CU-Nachricht.

15. Netzwerkknoten einer verteilten Basisstation, der Verarbeitungshardware beinhaltet und dazu konfiguriert ist, ein Verfahren nach einem der vorhergehenden Ansprüche zu implementieren.

## Revendications

1. Procédé dans une unité distribuée, DU, d'une station de base distribuée, la station de base distribuée comprenant la DU et une unité centrale, CU, pour gérer une communication de données précoce avec un équipement utilisateur, UE, le procédé comprenant :
la communication (1402 ; 304 ; 403 ; 405 ; 504), par la DU (174), avec l'UE (102) à l'aide d'un identifiant temporaire de l'UE ; **caractérisé en ce qu'**il comprend également
la réception (1404 ; 306 ; 490 ; 590), de la CU (172), d'un premier message CU-à-DU demandant une configuration de ressources configurées pour l'UE ;
la transmission (1406 ; 308A ; 308B ; 490 ; 590), à la CU (172), d'un message DU-à-CU incluant la configuration de ressources configurées pour l'UE (102) ;
la réception (310A ; 310B, de la CU (172), d'un second message CU-à-DU incluant un message incluant la configuration de ressources configurées et un RNTI de planification configuré, CS-RNTI, et indiquant de libérer une connexion de commande de ressource radio ;
l'extraction du message du second message CU-à-DU ; et
la transmission (311A ; 311B ; 312A ; 312B) du message à l'UE (102) ;
la communication (1408 ; 392A, 392B ; 492 ; 592) avec l'UE (102) conformément à la configuration de ressources configurées tandis que la connexion de commande de ressource radio entre l'UE (102) et la station de base distribuée n'est pas active.

2. Procédé selon la revendication 1, dans lequel le CS-RNTI est inclus dans le message DU-à-CU dans au moins l'un des éléments suivants :
un élément d'information défini par un protocole auquel la signalisation entre la CU (172) et la DU (174) est conforme ; ou
la configuration de ressources configurées.

3. Procédé selon l'une quelconque des revendications précédentes, comprenant également :
la génération d'informations de commande de liaison descendante, DCI, indiquant des ressources sur lesquelles l'UE (102) doit transmettre une transmission en liaison montante à la DU (174) pendant que la connexion de commande de ressources radio n'est pas active ;
le brouillage d'une valeur de contrôle de redondance cyclique, CRC, pour les DCI à l'aide du second identifiant temporaire ; et
la transmission (318 ; 330 des DCI et de la valeur de CRC à l'UE (102) alors que la connexion de commande de ressources radio n'est pas active.

4. Procédé selon la revendication 3, dans lequel :
la DU (174) transmet les DCI en réponse à l'échec de réception d'une transmission planifiée de l'UE (102) conformément à la configuration de ressources configurées ; et
les DCI planifient une retransmission de la transmission programmée.

5. Procédé selon la revendication 1 ou 2, comprenant également :
la génération de DCI indiquant des ressources sur lesquelles l'UE doit recevoir une transmission de liaison descendante de la DU (174) pendant que la connexion de commande de ressources radio n'est pas active ;
le brouillage d'une valeur de CRC pour les DCI à l'aide du second identifiant temporaire ; et
la transmission (318 ; 330) des DCI et de la valeur de CRC à l'UE (102) alors que la connexion de commande de ressources radio n'est pas active.

6. Procédé selon la revendication 1 ou 2, comprenant également :
la génération d'informations de commande de liaison descendante, DCI, indiquant des ressources sur lesquelles l'UE (102) doit transmettre une transmission en liaison montante à la DU (174) pendant que la connexion de commande de ressources radio n'est pas active ;
le brouillage d'une valeur de contrôle de redondance cyclique, CRC, pour les DCI à l'aide du premier identifiant temporaire ; et
la transmission des DCI et de la valeur de CRC à l'UE (102) alors que la connexion de commande de ressources radio n'est pas active.

7. Procédé selon l'une quelconque des revendications précédentes, comprenant également :
la transmission, à la CU, du CS-RNTI dans le message DU-à-CU.

8. Procédé dans une unité centrale, CU, d'une station de base distribuée, la station de base distribuée comprenant la CU et une unité distribuée, DU, pour gérer une communication de données précoce avec un équipement utilisateur (UE), le procédé comprenant :
l'obtention (1502 ; 304 ; 422 ; 504), par la CU (172), d'un premier identifiant temporaire de l'UE ;
la transmission (1504 ; 306 ; 490 ; 590), à la DU (174), d'un premier message CU-à-DU demandant une configuration de ressources configurées pour que l'UE (102) puisse utiliser pour communiquer avec la station de base distribuée pendant qu'une connexion de commande de ressources radio entre l'UE (102) et la station de base distribuée n'est pas active ;
la réception (1506 ; 308A ; 308B ; 490 ; 590), de la DU (174), d'un message DU-à-CU incluant la configuration de ressources configurées pour l'UE (102) ;
la génération d'un message incluant la configuration de ressources configurées et un CS-RNTI et indiquant de libérer la connexion de commande de ressources radio ; et
la transmission (1508 ; 310A ; 310B ; 490 ; 590) du message à l'UE (102) via la DU (174) en transmettant, à la DU (174), un second message CU-à-DU incluant le message.

9. Procédé selon la revendication 8, dans lequel l'identifiant CS-RNTI est inclus dans le message DU-à-CU en tant qu'élément d'information défini par un protocole auquel la signalisation entre la CU (172) et la DU (174) est conforme.

10. Procédé selon l'une quelconque des revendications précédentes, dans lequel la configuration de ressources configurées comprend une configuration d'octroi configurée pour que l'UE (102) transmette des transmissions de liaison montante à la station de base distribuée.

11. Procédé selon l'une quelconque des revendications précédentes, dans lequel le message est un message de libération de commande de ressources radio (RRC).

12. Procédé selon l'une quelconque des revendications précédentes, dans lequel :
la transmission, à l'UE (102), du message comprend la transmission du message à l'UE (102) fonctionnant dans un état connecté ; et
le message demande à l'UE (102) de passer de l'état connecté à un état inactif ou à un état de repos.

13. Procédé selon l'une quelconque des revendications 1 à 12, dans lequel :
la transmission, à l'UE (102), du message comprend la transmission du message à l'UE (102) fonctionnant dans un état de repos ou inactif sans faire passer l'UE (102) à un état connecté.

14. Procédé selon l'une quelconque des revendications 8 à 13, comprenant également :
la réception du CS-RNTI de la DU dans le message DU-à-CU.

15. Nœud de réseau d'une station de base distribuée comprenant du matériel de traitement et configuré pour mettre en œuvre un procédé selon l'une quelconque des revendications précédentes.
